# EUROPEAN PATENT APPLICATION

(11) **EP 4 459 791 A1**
(43) Date of publication of application: **06.11.2024**
(21) Application number: 22916853.9
(22) Date of filing: 30.12.2022
(51) Int. Cl.: H01Q 1/24, H04M 1/02, H01Q 1/38, H01Q 5/335, H01Q 5/50

(54) **ELECTRONIC DEVICE COMPRISING ANTENNA FORMED BY SEGMENTED STRUCTURE**

(30) Priority: 31.12.2021 KR 20210194736; 03.03.2022 KR 20220027757
(71) Applicant: SAMSUNG ELECTRONICS CO., LTD., Yeongtong-gu Suwon-si, Gyeonggi-do 16677 (KR)
(72) Inventor: LEE, Kyungjae, Suwon-si Gyeonggi-do 16677 (KR); PARK, Sungkoo, Suwon-si Gyeonggi-do 16677 (KR); HWANG, Soonho, Suwon-si Gyeonggi-do 16677 (KR); KIM, Junwoo, Suwon-si Gyeonggi-do 16677 (KR); KIM, Seunghwan, Suwon-si Gyeonggi-do 16677 (KR); CHUN, Jaebong, Suwon-si Gyeonggi-do 16677 (KR)
(74) Representative: HGF
(86) International application number: PCT/KR2022/021759
(87) International publication number: WO 2023/128712

(57) **Abstract**

An electronic device according to an embodiment comprises: a housing which includes a first conductive portion disposed at a first edge, a second conductive portion disposed at the first edge and a second edge perpendicular to the first edge, and a third conductive portion disposed at the second edge; a feeder which feeds power to a feeding point disposed in at least one of the first conductive portion and the second conductive portion; a connection element which can electrically connect the first conductive portion, the second conductive portion, and the third conductive portion to each other; and a processor. A first electrical path from the feeding point to one position of the first conductive portion may be different from a second electrical path from the feeding point to one position of the third conductive portion. Various other embodiments may also be possible.

## Description

### [Technical Field]

The disclosure relates to an electronic device including an antenna formed by a segmented structure.

### [Background Art]

An electronic device may transmit a signal through an antenna or receive a signal through the antenna. The electronic device may include a conductive portion formed of a conductive material on a portion of an outer periphery of a housing. The conductive portion may serve as an antenna for transmitting and/or receiving wireless signals fed from a wireless communication module. As the frequency band of the wireless signals used in the electronic devices expands, a plurality of antennas are included therein.

### [Detailed Description of the Invention]

### [Technical Problem]

Electronic devices may come into contact with a human body in use. The body has a relatively high dielectric constant, which may affect antennas of the electronic devices. For example, an impedance value of the antenna may change as a result of the antenna being in contact with the human body. The change in the impedance value of the antenna may degrade the performance of the antenna for transmitting and/or receiving wireless signals in a frequency range of a designated band.

As electronic devices trend toward miniaturization in size, there may be some limitations on designing of the lengths of antennas disposed in an electronic device. The antennas of the electronic device may be required to support signals in multiple bands and to transmit and/or receive the signals in multiple directions. Due to limited space in arrangement of components, it may be difficult to arrange a plurality of antennas supporting different bands in an electronic device.

Various embodiments of the disclosure provide an electronic device including at least one conductive portion that may act as an antenna, and can reduce an impact on a user's hand or head and support transmission and/or reception of signals of multiple bands.

The technical problems to be addressed in the disclosure are not limited to those described above, and other technical problems not mentioned herein will be clearly understood by those having ordinary knowledge in the art to which the disclosure belongs, from the following description.

### [Technical Solution]

In accordance with an embodiment, an electronic device comprises: a housing, the housing including a first conductive portion disposed on a first side portion, a second conductive portion spaced apart from one end of the first conductive portion and disposed in the first side portion and a second side portion perpendicular to the first side portion, a third conductive portion spaced apart from one end of the second conductive portion and disposed in the second side portion, and a plurality of non-conductive portions disposed between the first conductive portion, the second conductive portion, and the third conductive portion; a feeder that feeds to a feeding point disposed in at least one of the one end of the first conductive portion or another end of the second conductive portion; first matching circuitry capable of electrically connecting the first conductive portion and the second conductive portion; switch circuitry capable of electrically connecting the second conductive portion and the third conductive portion; and a processor operatively connected to the feeder, the first matching circuitry, and the switch circuitry, wherein the processor may communicate with an external electronic device through the first conductive portion, the second conductive portion, and the third conductive portion, and wherein a first electrical path from the feeding point to the other end of the first conductive portion may be different from a second electrical path from the feeding point to one end far from the second conductive portion of both ends of the third conductive portion.

In accordance with an embodiment, an electronic device comprises: a first housing including a first conductive portion disposed on a first side portion; a second housing including a second conductive portion disposed on a second side portion, a third conductive portion spaced apart from one end of the second conductive portion and disposed on the second side portion and a third side portion perpendicular to the second side portion, a fourth conductive portion spaced apart from one end of the third conductive portion and disposed on the third side portion, and a plurality of non-conductive portions disposed between the second conductive portion, the third conductive portion and the fourth conductive portion, the second housing being coupled to the first housing to be folded or unfolded with each other; a first antenna formed by the first conductive portion; at least one second antenna formed by at least one of the second conductive portion, the third conductive portion, and the fourth conductive portion; first matching circuitry capable of electrically connecting the second conductive portion and the third conductive portion; switch circuitry capable of electrically connecting the third conductive portion and the fourth conductive portion; and a processor operatively coupled to the first matching circuitry and the switch circuitry, wherein the processor controls the circuitry to form the at least one second antenna by electrical connection of each of the second conductive portion to the fourth conductive portion or at least two of the second conductive portion to the fourth conductive portion, wherein the first antenna may be configured to receive a first signal in a downlink frequency range of a first frequency band and a second signal in a downlink frequency range of a second frequency band from an external electronic device, and wherein the at least one second antenna may be configured to receive the first signal and the second signal from the external electronic device and transmit a third signal in an uplink frequency range of the first frequency band and a fourth signal in an uplink frequency range of the second frequency band to the external electronic device.

### [Effect of Invention]

In accordance with an embodiment, the electronic device may implement various shapes of antennas by selectively connecting at least some of the conductive portions forming a segmented structure on side members of a housing. In accordance with an embodiment, the electronic device may support multiple bands of signals and achieve a large effective volume of radiating body of the antenna, using the various shapes of antennas.

In accordance with an embodiment, a plurality of conductive portions spaced apart from each other may be disposed on one side of the electronic device (e.g., a lower end of the housing), so that the influence that may be exerted onto the antennas from a human body can be reduced. For example, the electronic device may have improved wireless communication performance, by reducing the influence on a user's hand or head.

The effects that can be obtained from the disclosure are not limited to those described above, and other effects not mentioned herein will be clearly understood by those having ordinary knowledge in the technical field to which the disclosure belongs from the following description.

### [Brief Description of the Drawings]

FIG. 1 is a block diagram of an electronic device in a network environment according to various embodiments.
FIG. 2 is a block diagram of an electronic device for supporting legacy network communication and 5G network communication according to various embodiments.
FIG. 3A is a schematic diagram illustrating an electronic device according to an embodiment.
FIG. 3B is an exploded perspective view of an electronic device according to an embodiment.
FIG. 4 is a front view of an electronic device according to an embodiment.
FIG. 5 illustrates a connection relationship between a feeder and conductive portions of an electronic device according to an embodiment.
FIG. 6 is a graph showing radiation characteristics of an electronic device according to an embodiment.
FIG. 7 is a simplified block diagram of a wireless communication module of an electronic device according to an embodiment.
FIG. 8 illustrates examples of antennas formed by connection of conductive portions of an electronic device according to an embodiment.
FIG. 9 is a graph showing radiation characteristics of an antenna formed by connection of conductive portions of an electronic device according to an embodiment.
FIGS. 10A, 10B, and 10C illustrate examples of a connection relationship between a feeder and conductive portions of an electronic device according to an embodiment.
FIG. 11 illustrates an example of a use state of an electronic device according to an embodiment.
FIG. 12A shows an example of a connection relationship between a feeder and conductive portions of an electronic device according to an embodiment.
FIG. 12B is an example of a simplified block diagram of a wireless communication module of the electronic device shown in FIG. 12A.
FIGS. 12C, 12D, and 12E illustrate examples of a connection relationship between feeders and conductive portions of an electronic device according to an embodiment.
FIG. 13A illustrates an example of a connection relationship between feeders and conductive portions of an electronic device according to an embodiment.
FIG. 13B is an example of a simplified block diagram of a wireless communication module of the electronic device shown in FIG. 13A.
FIGS. 13C and 13D illustrate examples of a connection relationship between feeders and conductive portions of an electronic device according to an embodiment.
FIG. 14 illustrates an example of a connection relationship between feeders and conductive portions of an electronic device according to an embodiment.
FIG. 15 is a front view of an electronic device according to an embodiment.
FIG. 16 illustrates examples of antennas formed by electrical connection of conductive portions of an electronic device according to an embodiment.

### [Mode for Carrying out the Invention]

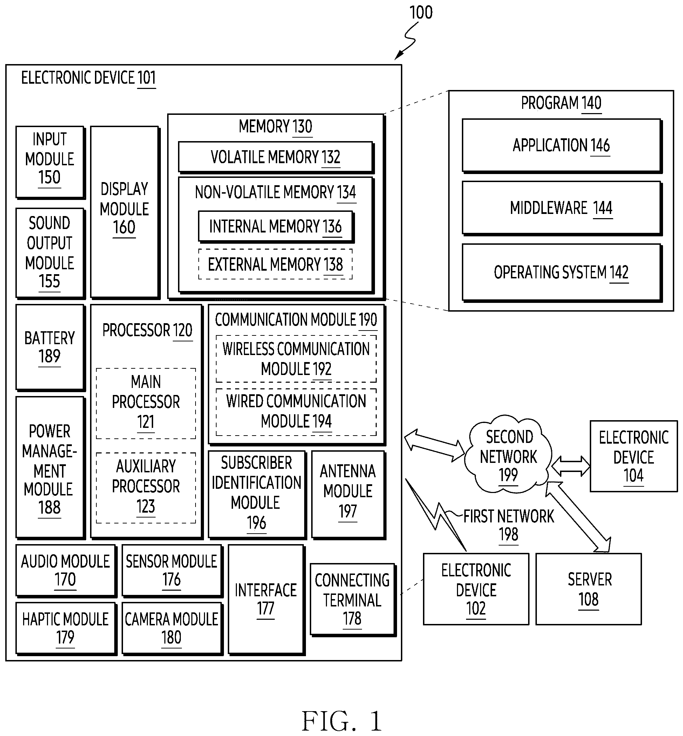

FIG. 1 is a block diagram of an electronic device 100 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., a bottom surface) of the printed circuit board, or adjacent to the first surface and capable of supporting a designated high-frequency band (e.g., the mmWave band), and a plurality of antennas (e.g., array antennas) disposed on a second surface (e.g., a top surface or a side portion) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

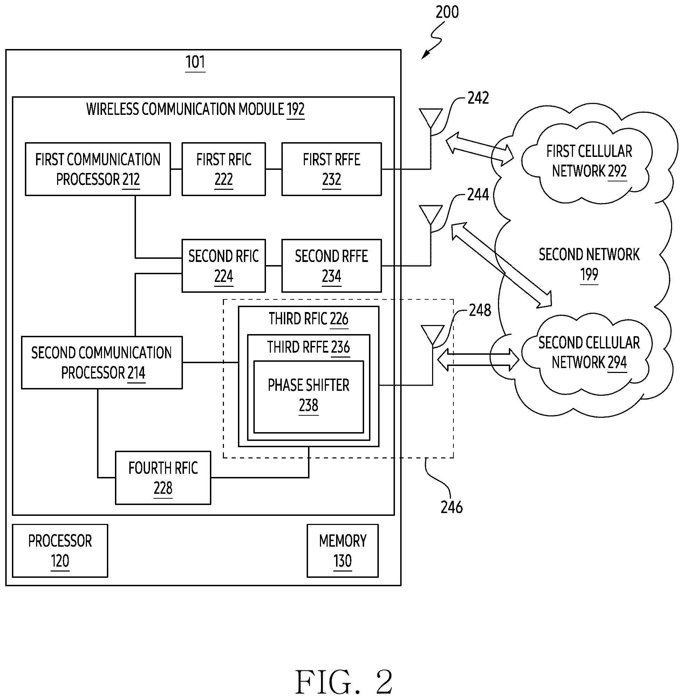

FIG. 2 is a block diagram 200 of the electronic device 101 for supporting legacy network communication and 5G network communication, according to various embodiments. Referring to FIG. 2, the electronic device 101 may include a first communication processor 212, a second communication processor 214, a first radio frequency integrated circuit (RFIC) 222, a second RFIC 224, and a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The second network 199 may include a first cellular network 292 and a second cellular network 294. According to another embodiment, the electronic device 101 may further include at least one of the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may constitute at least a part of a wireless communication module 192. According to another embodiment, the fourth RFIC 228 may be omitted or may be included as a part of the third RFIC 226.

The first communication processor 212 may support the establishment of a communication channel of a band to be used for wireless communication with the first cellular network 292 and legacy network communication through the established communication channel. According to various embodiments, the first cellular network 292 may be a legacy network including a 2nd generation (2G), 3rd generation (3G), 4th generation (4G), and/or long-term evolution (LTE) network. The second communication processor 214 may support the establishment of a communication channel corresponding to a specified band (e.g., approximately 6 GHz to 60 GHz) among bands to be used for wireless communication with the second cellular network 294, and 5G network communication through the established communication channel. According to various embodiments, the second cellular network 294 may be a 5G network defined by 3GPP. Additionally, according to an embodiment, the first communication processor 212 or the second communication processor 214 may support the establishment of a communication channel corresponding to another specified band (e.g., approximately 6 GHz or less) among bands to be used for wireless communication with the second cellular network 294, and 5G network communication through the established communication channel. According to an embodiment, the first communication processor 212 and the second communication processor 214 may be implemented in a single chip or a single package. According to various embodiments, the first communication processor 212 or the second communication processor 214 may be formed with the processor 120, the auxiliary processor 123 of FIG. 1, or the communication module 190 in a single chip or a single package.

Upon transmission, the first RFIC 222 may convert a baseband signal generated by the first communication processor 212 into a radio frequency (RF) signal of approximately 700 MHz to approximately 3 GHz used in the first cellular network 292 (e.g., a legacy network). Upon reception, an RF signal may be obtained from the first cellular network 292 (e.g., a legacy network) through an antenna (e.g., the first antenna module 242), and may be preprocessed through an RFFE (e.g., the first RFFE 232). The first RFIC 222 may convert the preprocessed RF signal into a baseband signal so as to be processed by the first communication processor 212.

Upon transmission, the second RFIC 224 may convert a baseband signal generated by the first communication processor 212 or the second communication processor 214 into an RF signal (hereinafter, referred to as a 5G Sub6 RF signal) of the Sub6 band (e.g., approximately 6 GHz or less) used in the second cellular network 294 (e.g., the 5G network). Upon reception, a 5G Sub6 RF signal may be obtained from the second cellular network 294 (e.g., the 5G network) through an antenna (e.g., the second antenna module 244), and may be preprocessed through an RFFE (e.g., the second RFFE 234). The second RFIC 224 may convert the preprocessed 5G Sub6 RF signal into a baseband signal so as to be processed by a corresponding one of the first communication processor 212 or the second communication processor 214.

The third RFIC 226 may convert a baseband signal generated by the second communication processor 214 into an RF signal (hereinafter, referred to as a 5G Above6 RF signal) of the 5G Above6 band (e.g., approximately 6 GHz to approximately 60 GHz) to be used in the second cellular network 294 (e.g., the 5G network). Upon reception, a 5G Above6 RF signal may be obtained from the second cellular network 294 (e.g., the 5G network) through an antenna (e.g., the antenna 248), and may be preprocessed through the third RFFE 236. For example, the third RFFE 236 may perform preprocessing of the signal by using a phase shifter 238. The third RFIC 226 may convert the preprocessed 5G Above6 RF signal into a baseband signal so as to be processed by the second communication processor 214. According to an embodiment, the third RFFE 236 may be formed as a part of the third RFIC 226.

According to an embodiment, the electronic device 101 may include the fourth RFIC 228 separately from or at least as a part of the third RFIC 226. In this case, the fourth RFIC 228 may convert the baseband signal generated by the second communication processor 214 into an RF signal (hereinafter, referred to as an intermediate frequency (IF) signal) of an intermediate frequency band (e.g., approximately 9 GHz to approximately 11 GHz), and then transmit the IF signal to the third RFIC 226. The third RFIC 226 may convert the IF signal into a 5G Above6 RF signal. Upon reception, a 5G Above6 RF signal may be received from the second cellular network 294 (e.g., the 5G network) through an antenna (e.g., the antenna 248), and may be converted into an IF signal by the third RFIC 226. The fourth RFIC 228 may convert the IF signal into the baseband signal so as to be processed by the second communication processor 214.

According to an embodiment, the first RFIC 222 and the second RFIC 224 may be implemented as a single chip or at least a part of a single package. According to an embodiment, the first RFFE 232 and the second RFFE 234 may be implemented as a single chip or at least a part of a single package. According to an embodiment, at least one of the first antenna module 242 or the second antenna module 244 may be omitted or combined with another antenna module to process RF signals of a plurality of corresponding bands.

According to an embodiment, the third RFIC 226 and the antenna 248 may be disposed on the same substrate to form a third antenna module 246. For example, the wireless communication module 192 or the processor 120 may be disposed on a first substrate (e.g., a main PCB). In this case, the third RFIC 226 may be disposed in a partial region (e.g., the lower surface) of a second substrate (e.g., a sub PCB) separate from the first substrate, and the antenna 248 may be disposed in another partial region (e.g., the upper surface) to form the third antenna module 246. According to an embodiment, the antenna 248 may include, for example, an antenna array that may be used for beamforming. By disposing the third RFIC 226 and the antenna 248 on the same substrate, it is possible to reduce the length of the transmission line therebetween. This, for example, may reduce the loss (e.g., attenuation) of a signal in a high frequency band (e.g., approximately 6 GHz to approximately 60 GHz) used for 5G network communication by the transmission line. Accordingly, the electronic device 101 may improve the quality or speed of communication with the second cellular network 294 (e.g., the 5G network).

The second cellular network 294 (e.g., the 5G network) may be operated independently of (e.g., Stand-Alone (SA)) or operated to be connected to (e.g., Non-Stand Alone (NSA)) the first cellular network 292 (e.g., the legacy network). For example, in the 5G network, there may be only an access network (e.g., 5G radio access network (RAN) or next-generation RAN (NG RAN)) and no core network (e.g., next-generation core (NGC)). In this case, after accessing the access network of the 5G network, the electronic device 101 may access an external network (e.g., the Internet) under the control of a core network (e.g., evolved packed core (EPC)) of the legacy network. Protocol information for communication with the legacy network (e.g., LTE protocol information) or protocol information for communication with the 5G network (e.g., New Radio (NR) protocol information) may be stored in the memory 230 and may be accessed by other components (e.g., the processor 120, the first communication processor 212, or the second communication processor 214).

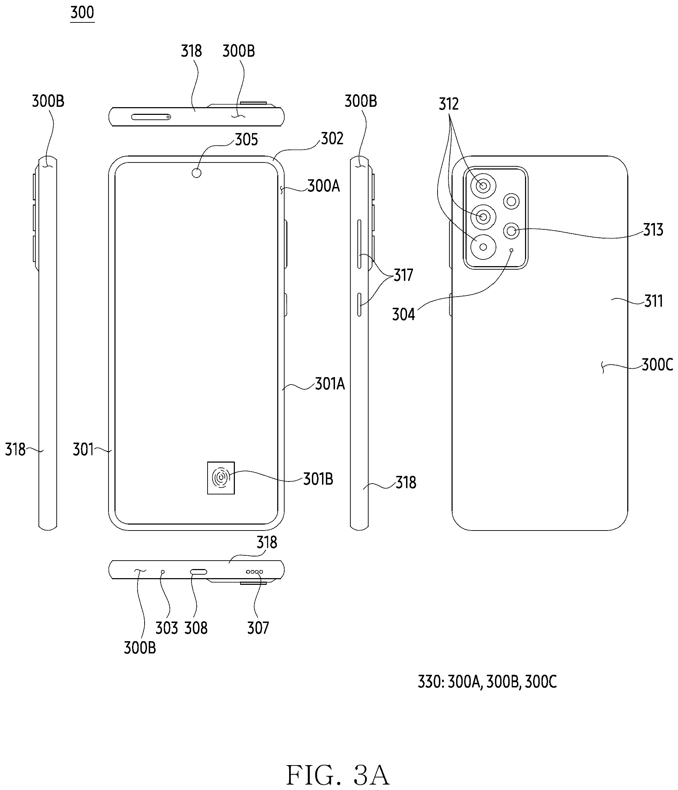

FIG. 3A is a schematic diagram illustrating an electronic device according to an embodiment.

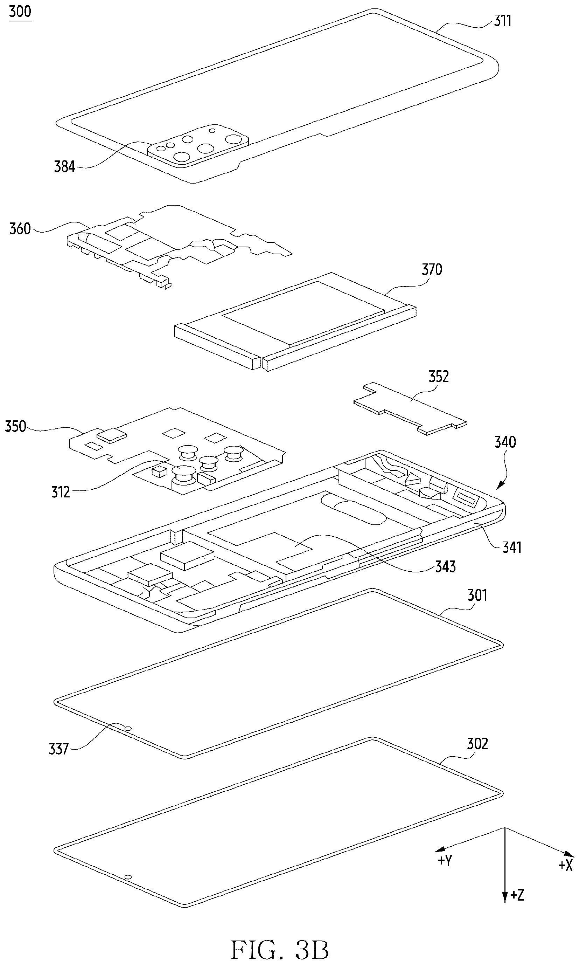

Referring to FIG. 3A, an electronic device 300 according to an embodiment may include a housing 330 forming an appearance of the electronic device 300. For example, the housing 330 may include a first surface (or front surface) 300A, a second surface (or rear surface) 300C, and a third surface (or side portion) 300B surrounding a space between the first surface 300A and the second surface 300C. In an embodiment, the housing 330 may refer to a structure (e.g., a frame structure 340 of FIG. 3B) forming at least a portion of the first surface 300A, the second surface 300C, and/or the third surface 300B.

The electronic device 300 according to an embodiment may include a substantially transparent front plate 302. In an embodiment, the front plate 302 may form at least a portion of the first surface 300A. In an embodiment, the front plate 302 may include, for example, a glass plate including various coating layers or a polymer plate, but the disclosure is not limited thereto.

The electronic device 300 according to an embodiment may include a substantially opaque rear plate 311. In an embodiment, the rear plate 311 may form at least a portion of the second surface 300C. In an embodiment, the rear plate 311 may be formed of coated or colored glass, ceramic, polymer, metal (e.g., aluminum, stainless steel (STS), or magnesium), or a combination of at least two of these materials.

The electronic device 300 according to an embodiment may include a side bezel structure (or a side member) 318 (e.g., a side wall 341 of a frame structure 340 of FIG. 3B). In an embodiment, the side bezel structure 318 may be coupled to the front plate 302 and/or the rear plate 311 to form at least a portion of the third surface 300b of the electronic device 300. For example, the side bezel structure 318 may form the entirety of the third surface 300B of the electronic device 300. For example, the side bezel structure 318 may form the third surface 300B of the electronic device 300 together with the front plate 302 and/or the rear plate 311.

As opposed to the illustrated embodiment, in case that the third surface 300B of the electronic device 300 is partially formed by the front plate 302 and/or the rear plate 311, the front plate 302 and/or the rear plate 311 may include a region that seamlessly extends bending toward the rear plate 311 and/or the front plate 302 from its periphery. The extended region of the front plate 302 and/or the rear plate 311 may be positioned, for example, at both ends of a long edge of the electronic device 300, but the disclosure is not limited to the above-described example.

In an embodiment, the side bezel structure 318 may include a metal and/or a polymer. In an embodiment, the rear plate 311 and the side bezel structure 318 may be integrally formed and may include the same material (e.g., a metal material such as aluminum), but the disclosure is not limited thereto. For example, the rear plate 311 and the side bezel structure 318 may be formed in separate structures and/or may include different materials.

In an embodiment, the electronic device 300 may include at least one of a display 301, audio modules (303, 303, 307), a sensor module (not shown), camera modules (305, 312, 313), a key input device 317, a light emitting device (not shown), and/or a connector hole 308. In another embodiment, the electronic device 300 may omit at least one of those components (e.g., the key input device 317 or the light emitting device (not shown)), or may further include another component.

In an embodiment, the display 301 (e.g., the display module 160 of FIG. 1) may be visually exposed through a corresponding portion of the front plate 302 to the outside. For example, at least a portion of the display 301 may be visible through the front plate 302 forming the first surface 300A. In an embodiment, the display 301 may be disposed on the back surface of the front plate 302.

In an embodiment, the exterior appearance of the display 301 may be formed substantially the same as that of the front plate 302 adjacent to the display 301. In an embodiment, the spacing between the outer perimeter of the display 301 and the outer perimeter of the front plate 302 may be formed to be substantially the same along the perimeter in order to expand the area in which the display 301 is visually exposed.

In an embodiment, the display 301 (or the first surface 300A of the electronic device 300) may include a screen display area 301A. In an embodiment, the display 301 may provide visual information to a user through the screen display area 301A. In the illustrated embodiment, when the first surface 300A is viewed from the front, it is illustrated that the screen display area 301A is located inside the first surface 300A, spaced apart from the outer perimeter of the first surface 300A, but the disclosure is not limited thereto. In an embodiment, when the first surface 300A is viewed from the front, at least a portion of the periphery of the screen display area 301A may substantially coincide with the periphery of the first surface 300A (or the front plate 302).

In an embodiment, the screen display area 301A may include a sensing area 301B configured to obtain biometric information of a user. Here, the meaning of the phrase "the screen display area 301A including a sensing area 301B" may be understood to imply that at least a portion of the sensing area 301B may overlap the screen display area 301A. For example, the sensing area 301B may refer to an area in which visual information may be displayed by the display 301, like other area of the screen display area 301A, and further biometric information (e.g., fingerprint) of the user may be obtained. In another embodiment, the sensing area 301B may be formed in the key input device 317.

In an embodiment, the display 301 may include an area where which a first camera module 305 (e.g., a camera module 180 of FIG. 1) is located. In an embodiment, an opening may be formed in the area of the display 301, and the first camera module 305 (e.g., a punch hole camera) may be at least partially disposed in the opening to face the first surface 300A. In such a circumstance, the screen display area 301A may be formed to surround at least a portion of a periphery of the opening. In an embodiment, the first camera module 305 (e.g., an under display camera (UDC)) may be disposed under the display 301 to overlap the area of the display 301. In such a case, the display 301 may provide visual information to the user through the area, and additionally the first camera module 305 may obtain an image corresponding to a direction facing the first surface 300A through the area of the display 301.

In an embodiment, the display 301 may be coupled to or disposed adjacent to a touch sensing circuit, a pressure sensor capable of measuring an intensity (pressure) of touch, and/or a digitizer detecting a magnetic field type of stylus pen.

In an embodiment, the audio modules (303, 304, 307) (e.g., an audio module 170 of FIG. 1) may include microphone holes (303, 304) and a speaker hole 307.

In an embodiment, the microphone holes (303, 304) may include a first microphone hole 303 formed in a partial area of the third surface 300B and a second microphone hole 304 formed in a partial area of the second surface 300C. A microphone (not shown) for obtaining sound from the outside may be disposed inside the microphone holes (303, 304). The microphone may include a plurality of microphones to detect a direction of the sound.

In an embodiment, the second microphone hole 304 formed in a partial area of the second surface 300C may be disposed adjacent to the camera modules (305, 312, 313). For example, the second microphone hole 304 may obtain sound according to the operation of the camera modules (305, 312, 313). However, the disclosure is not limited thereto.

In an embodiment, the speaker hole 307 may include an external speaker hole 307 and a receiver hole (not shown) for phone calling. The external speaker hole 307 may be formed on a portion of the third surface 300B of the electronic device 300. In an embodiment, the external speaker hole 307 may be implemented as a single hole together with the microphone hole 303. Although not illustrated herein, the receiver hole (not shown) for phone calling may be formed on another portion of the third surface 300B. For example, the receiver hole for phone calling may be formed on the opposite side of the external speaker hole 307 in the third surface 300B. For example, with respect to the illustration of FIG. 3A, the external speaker hole 307 may be formed on the third surface 300B corresponding to the lower end of the electronic device 300, and the receiver hole for phone calling may be formed on the third surface 300B corresponding to the upper end of the electronic device 300. However, the disclosure is not limited thereto, and in another embodiment, the receiver hole for phone calling may be formed in a position other than the third surface 300B. For example, the receiver hole for phone calling may be formed of a spaced apart space between the front plate 302 (or the display 301) and the side bezel structure 318.

In an embodiment, the electronic device 300 may include at least one speaker (not shown) configured to output audio sound to the outside of the housing 330 through the external speaker hole 307 and/or the receiver hole (not shown) for phone calling.

In an embodiment, the sensor module (not shown) (e.g., a sensor module 176 of FIG. 1) may generate an electrical signal or a data value corresponding to an operating state in the electronic device 300 or an external environmental condition. For example, the sensor module may include at least one of a proximity sensor, an HRM sensor, a fingerprint sensor, a gesture sensor, a gyro sensor, a pressure sensor, a magnetic sensor, an acceleration sensor, a grip sensor, a color sensor, an infrared (IR) sensor, a biometric sensor, a temperature sensor, a humidity sensor, an illumination sensor or the like.

In an embodiment, the camera modules (305, 312, 313) (e.g., a camera module 180 of FIG. 1) may include a first camera module 305 disposed to face the first surface 300A of the electronic device 300, a second camera module 312 disposed to face the second surface 300C, and a flash 313.

In an embodiment, the second camera module 312 may include a plurality of cameras (e.g., a dual camera, a triple camera, or a quad camera). However, the second camera module 312 is not limited to essentially including a plurality of cameras, and may include one camera.

In an embodiment, the first camera module 305 and the second camera module 312 may include one or more lenses, an image sensor, and/or an image signal processor.

In an embodiment, the flash 313 may include, for example, a light emitting diode or a xenon lamp. In an embodiment, two or more lenses (e.g., infrared camera, wide-angle lens and telephoto lens) and image sensors may be disposed on one surface of the electronic device 300.

In an embodiment, the key input device 317 (e.g., an input module 150 of FIG. 1) may be disposed on the third surface 300B of the electronic device 300. In an embodiment, the electronic device 300 may not include some or the entirety of the key input device 317, and the key input device 317 not included therein may be implemented on the display 301 in another form such as a soft key.

In an embodiment, the connector hole 308 may be formed on the third surface 300B of the electronic device 300 such that a connector of an external device may be received therein. A connection terminal (e.g., a connection terminal 178 of FIG. 1) electrically connected to the connector of the external device may be disposed in the connector hole 308. The electronic device 300 according to an embodiment may include an interface module (e.g., an interface 177 of FIG. 1) for processing electrical signals transmitted/received via the connection terminal.

In an embodiment, the electronic device 300 may include a light emitting device (not shown). For example, the light emitting device (not shown) may be disposed on the first surface 300A of the housing 330. The light emitting device (not shown) may provide state information of the electronic device 300 in the form of light. In an embodiment, the light emitting device (not shown) may provide a light source in association with operation of the first camera module 305. For example, the light emitting device (not shown) may include an LED, an IR LED, and/or a xenon lamp.

FIG. 3B is an exploded perspective view of an example electronic device according to an embodiment.

Hereinafter, redundant description of configuration having the same reference numerals as those of the above-described configuration will be omitted for conciseness and brevity.

Referring to FIG. 3B, the electronic device 300 according to an embodiment may include a frame structure 340, a first printed circuit board 350, a second printed circuit board 352, a cover plate 360, and a battery 370.

In an embodiment, the frame structure 340 may include a sidewall 341 forming an exterior appearance (e.g., the third surface 300B of FIG. 3A) of the electronic device 300 and a supporting portion 343 extending inward from the sidewall 341. In an embodiment, the frame structure 340 may be disposed between the display 301 and the rear plate 311. In an embodiment, the sidewall 341 of the frame structure 340 may surround a space between the rear plate 311 and the front plate 302 (and/or the display 301), and the supporting portion 343 of the frame structure 340 may extend from the sidewall 341 within the space.

In an embodiment, the frame structure 340 may support or accommodate other components included in the electronic device 300. For example, the display 301 may be disposed on one surface of the frame structure 340 facing one direction (e.g., +z direction), and the display 301 may be supported by the supporting portion 343 of the frame structure 340. For example, the first printed circuit board 350, the second printed circuit board 352, the battery 370, and the second camera module 312 may be arranged on the other surface of the frame structure 340 facing a direction (e.g., -z direction) opposite to the one direction. The first printed circuit board 350, the second printed circuit board 352, the battery 370, and the second camera module 312 may be seated in a recess defined by the sidewall 341 of the frame structure 340 and/or the supporting portion 343, respectively.

In an embodiment, the first printed circuit board 350, the second printed circuit board 352, and the battery 370 may be coupled to the frame structure 340, respectively. For example, the first printed circuit board 350 and the second printed circuit board 352 may be fixedly disposed onto the frame structure 340, through a coupling member such as a screw. For example, the battery 370 may be fixedly disposed onto the frame structure 340, through an adhesive member (e.g., a double-sided tape). However, the disclosure is not limited to the above-described example.

In an embodiment, the cover plate 360 may be disposed between the first printed circuit board 350 and the rear plate 311. In an embodiment, the cover plate 360 may be disposed on the first printed circuit board 350. For example, the cover plate 360 may be disposed on a surface facing the -z direction of the first printed circuit board 350.

In an embodiment, the cover plate 360 may at least partially overlap the first printed circuit board 350 with respect to the z axis. In an embodiment, the cover plate 360 may cover at least a partial area of the first printed circuit board 350. With this configuration, the cover plate 360 may protect the first printed circuit board 350 from a physical impact or may prevent a connector coupled to the first printed circuit board 350 from being separated.

In an embodiment, the cover plate 360 may be fixedly disposed onto the first printed circuit board 350 through a coupling member (e.g., a screw), or may be coupled to the frame structure 340 together with the first printed circuit board 350 through the coupling member.

In an embodiment, the display 301 may be disposed between the frame structure 340 and the front plate 302. For example, the front plate 302 may be disposed on one side (e.g., +z direction) of the display 301, and the frame structure 340 may be disposed on the other side (e.g., -z direction).

In an embodiment, the front plate 302 may be coupled to the display 301. For example, the front plate 302 and the display 301 may be bonded to each other, with an optical adhesive member (e.g., optically clear adhesive (OCA) or optically clear resin (OCR)) interposed therebetween.

In an embodiment, the front plate 302 may be coupled to the frame structure 340. For example, the front plate 302 may include an outer portion extending out of the display 301, when viewed in the z-axis direction, and may be bonded to the frame structure 340 with an adhesive member (e.g., a double-sided tape) disposed between the outer portion of the front plate 302 and the frame structure 340 (e.g., the sidewall 341). However, the disclosure is not limited to the above-described example.

In an embodiment, a processor (e.g., the processor 120 of FIG. 1), a memory (e.g., the memory 130 of FIG. 1), and/or an interface (e.g., the interface 177 of FIG. 1) may be mounted onto the first printed circuit board 350 and/or the second printed circuit board 352. The processor may include, for example, one or more of a central processing unit, an application processor, a graphic processing unit, an image signal processor, a sensor hub processor, or a communication processor. The memory may include, for example, a volatile memory and/or a non-volatile memory. The interface may include, for example, a high-definition multimedia interface (HDMI), a universal serial bus (USB) interface, an SD card interface, and/or an audio interface. The interface may electrically or physically connect the electronic device 300 to an external electronic device and may include a USB connector, an SD card/multimedia card (MMC) connector, or an audio connector. In an embodiment, the first printed circuit board 350 and the second printed circuit board 352 may be operatively or electrically connected to each other through a connection member (e.g., a flexible printed circuit board).

In an embodiment, the battery 370 may supply power to at least one component of the electronic device 300. For example, the battery 370 may include a rechargeable secondary battery or a fuel cell. At least a part of the battery 370 may be disposed on substantially the same plane as the first printed circuit board 350 and/or the second printed circuit board 352.

The electronic device 300 according to an embodiment may include an antenna module (not shown) (e.g., the antenna module 197 of FIG. 1). In an embodiment, the antenna module may be disposed between the rear plate 311 and the battery 370. The antenna module may include, for example, a near-field communication (NFC) antenna, a wireless charging antenna, and/or a magnetic secure transmission (MST) antenna. The antenna module may, for example, perform short-range communication with an external device or wirelessly transmit/receive electric power to/from the external device.

In an embodiment, the first camera module 305 (e.g., the front camera) may be disposed in at least a portion (e.g., the supporting portion 343) of the frame structure 340 such that its lens may receive external light through a partial area (e.g., a camera area 137) of the front plate 302 (e.g., the front surface 300A of FIG. 3A).

In an embodiment, the second camera module 312 (e.g., a rear camera) may be disposed between the frame structure 340 and the rear plate 311. In an embodiment, the second camera module 312 may be electrically connected to the first printed circuit board 350 with a connection member (e.g., a connector). In an embodiment, the second camera module 312 may be disposed such that the lens may receive external light through a camera area 384 of the rear plate 311 of the electronic device 300.

In an embodiment, the camera area 384 may be formed on a surface (e.g., the rear surface 300C of FIG. 3A) of the rear plate 311. In an embodiment, the camera area 384 may be formed to be at least partially transparent so that external light may be incident on the lens of the second camera module 312. In an embodiment, at least a portion of the camera area 384 may protrude from the surface of the rear plate 311 to a predetermined height. However, the disclosure is not limited thereto, and in an embodiment, the camera area 384 may form substantially the same plane as the surface of the rear plate 311.

In an embodiment, the housing 330 of the electronic device 300 may refer to a configuration or a structure that forms at least a portion of the appearance of the electronic device 300. In this context, at least some of the front plate 302, the frame structure 340, and/or the rear plate 311 forming the appearance of the electronic device 300 may be referred to as a housing of the electronic device 300.

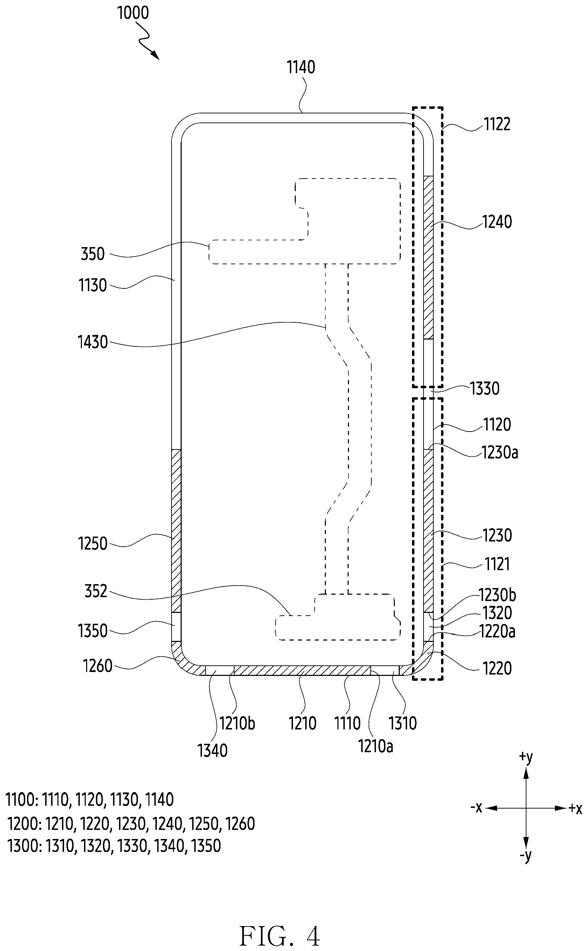

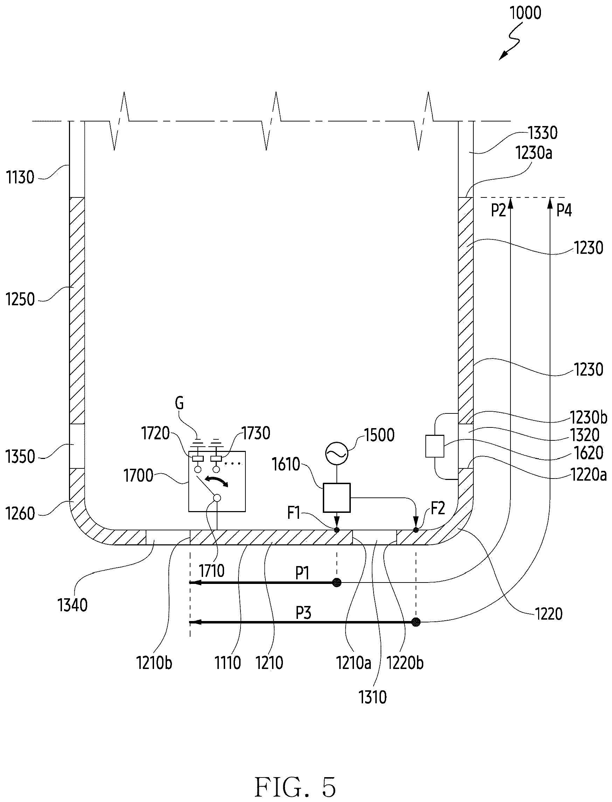

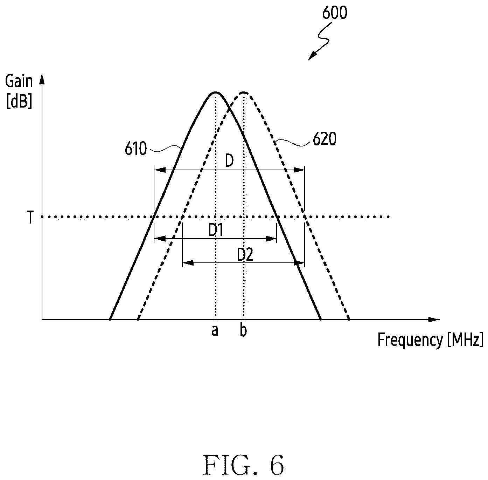

FIG. 4 is a front view of an electronic device according to an embodiment. FIG. 5 illustrates an example of a connection relationship between a feeder and a conductive portion of an electronic device according to an embodiment. FIG. 6 is a graph illustrating radiation characteristics of an electronic device according to an embodiment.

Referring to FIG. 4, according to an embodiment, an electronic device 1000 may include a housing 1100 including a plurality of conductive portions 1200, printed circuit boards (PCBs) (350, 352), and a processor (e.g., the processor 120 of FIG. 1).

According to an embodiment, the housing 1100 may include a plurality of side portions forming an outer appearance and conductive portions 1200 disposed on some of the side portions. For example, the housing 1100 may include a first side portion 1110, a second side portion 1120 perpendicularly contacting the first side portion 1110, a third side portion 1130 facing the second side portion 1120, and a fourth side portion 1140 facing the first side portion 1110. The first side portion 1110 and the fourth side portion 1140 may extend in a first direction (+x direction or -x direction), and the second side portion 1120 and the third side portion 1130 may extend in a second direction (+y direction or -y direction) perpendicular to the first direction, so that the housing 1100 may have a rectangular shape. According to an embodiment, the housing 1100 may have a shape deformed from such a rectangular shape. For example, corners of the housing 1100 may be chamfered or rounded. According to an embodiment, the lengths of the second side portion 1120 and the third side portion 1130 may be larger than the lengths of the first side portion 1110 and the fourth side portion 1140.

According to an embodiment, the housing 1100 may include first to sixth conductive portions (1210, 1220, 1230, 1240, 1250, 1260) disposed on the first to fourth side portions (1110, 1120, 1130, 1140) respectively. The first to sixth conductive portions (1210, 1220, 1230, 1240, 1250, 1260) may be spaced apart from each other.

For example, the first conductive portion 1210 may be disposed on the first side portion 1110. The second conductive portion 1220 may be spaced apart from one end 1210a of the first conductive portion 1210 and may be disposed on the first side portion 1110 and the second side portion 1120. The third conductive portion 1230 may be spaced apart from one end 1220a of the second conductive portion 1220 and may be disposed on the second side portion 1120. The fourth conductive portion 1240 may be spaced apart from one end 1230a of the third conductive portion 1230 and may be disposed on the second side portion 1120. The fifth conductive portion 1250 may be disposed on the third side portion 1130 and may face at least a portion of the third conductive portion 1230. The sixth conductive portion 1260 may be spaced apart from the other end 1210b opposite to the one end 1210a of the first conductive portion 1210 and may be disposed on the first side portion 1110 and the third side portion 1130.

According to an embodiment, the housing 1100 may include a plurality of non-conductive portions 1300 disposed between the conductive portions 1200. With the plurality of non-conductive portions 1300, the conductive portions 1200 may form a segmented structure spaced apart from each other. For example, the plurality of non-conductive portions 1300 may include a first non-conductive portion 1310 disposed between the first conductive portion 1210 and the second conductive portion 1220, a second non-conductive portion 1320 disposed between the second conductive portion 1220 and the third conductive portion 1230, a third non-conductive portion 1330 disposed between the third conductive portion 1230 and the fourth conductive portion 1340, a fourth non-conductive portion 1340 disposed between the first conductive portion 1210 and the sixth conductive portion 1260, and/or a fifth non-conductive portion 1350 disposed between the sixth conductive portion 1260 and the fifth conductive portion 1250.

According to an embodiment, the second side portion 1120 may include a first region 1121 in which at least a portion of the second conductive portion 1220 and the third conductive portion 1230 are disposed and a second region 1122 in which the fourth conductive portion 1240 is disposed. For example, the first region 1121 may be referred to as an area of the second side portion 1120 in the -y direction, and the second region 1122 may be referred to as an area of the second side portion 1120 in the +y direction, but the disclosure is not limited thereto. An area of the third side portion 1130 in which the fifth conductive portion 1250 and at least a portion of the sixth conductive portion 1260 are disposed may face at least a portion of the second region 1122.

According to an embodiment, an antenna may be formed by some or a combination of the conductive portions 1200 and the plurality of non-conductive portions 1300. The conductive portions 1200 disposed on the side portions of the housing 1100 may operate as antennas capable of transmitting and/or receiving wireless signals. For example, the conductive portions 1200 may include a conductive material (e.g., metal) and may be fed from a wireless communication circuit (e.g., the wireless communication module 192 of FIG. 1) to transmit and/or receive a wireless signal in a specified band.

According to an embodiment, the printed circuit boards (350, 352) may include a plurality of conductive layers and a plurality of non-conductive layers alternately stacked with the conductive layers. The printed circuit boards (350, 352) may provide electrical connections between the printed circuit boards (350, 352) and/or various electronic components disposed outside, using wires and conductive vias formed in the conductive layer. According to an embodiment, the printed circuit boards (350, 352) may include a first printed circuit board 350 and/or a second printed circuit board 352 spaced apart from each other. The first printed circuit board 350 and the second printed circuit board 352 may be electrically connected to each other. For example, the electronic device 1000 may include a cable 1430 electrically connecting the first printed circuit board 350 and the second printed circuit board 352. In an embodiment, the cable 1430 may be a cable for transmitting a wireless signal. For example, the cable 1430 may use a coaxial cable or a flexible RF cable (FRC). According to an embodiment, the first printed circuit board 350 may be adjacent to the second region 1122 of the second side portion 1120, and the second printed circuit board 352 may be adjacent to the first region 1121 of the second side portion 1120. For example, the first printed circuit board 350 may be disposed above the housing 1100 (e.g., in +y direction), and the second printed circuit board 352 may be disposed below the housing 1100 (e.g., in -y direction). The first printed circuit board 350 may be electrically connected to the adjacent fourth conductive portion 1240, and the second printed circuit board 352 may be electrically connected to the adjacent conductive portions (1210, 1220, 1230, 1250, 1260).

According to an embodiment, the processor may communicate with an external electronic device through the conductive portions 1200. For example, the processor may be disposed on the first printed circuit board 350. The wireless signal received through the fourth conductive portion 1240 adjacent to the first printed circuit board 350 may be transmitted to the first printed circuit board 350 and then provided to the processor via the first printed circuit board 350. A wireless signal received through at least one of the first conductive portion 1210, the second conductive portion 1220, the third conductive portion 1230, the fifth conductive portion 1250, and the sixth conductive portion 1260 among the conductive portions 1200 adjacent to the second printed circuit board 352 may be transmitted to the second printed circuit board 352, transmitted to the first printed circuit board 350 through the cable 1430, and then provided to the processor through the first printed circuit board 350. When the electronic device 1000 transmits the wireless signal to the external electronic device, the processor may transmit the wireless signal to at least one of the first conductive portion 1210, the second conductive portion 1220, the third conductive portion 1230, the fifth conductive portion 1250, and the sixth conductive portion 1260, among the conductive portions 1200 adjacent to the second printed circuit board 352, via the first printed circuit board 350, the cable 1430, and the second printed circuit board 352.

Referring to FIG. 5, according to an embodiment, the electronic device 1000 may include a feeder 1500 configured to feed at least one of the conductive portions 1200, a first matching circuit 1610 configured to adjust a frequency of an electrical signal provided from the feeder 1500 to a first feeding point F1 and/or a second feeding point F2, a first switch circuit 1620 configured to electrically connect the second conductive portion 1220 to a third conductive portion 1230, and/or a second matching circuit 1700 configured to change or set characteristics of an antenna.

According to an embodiment, the feeder 1500 may feed the feeding point F 1 or F2 disposed in at least one of the conductive portions 1200. The conductive portions 1200 may operate as an antenna, receiving a wireless signal from the outside or radiating a wireless signal to the outside in response to feeding from the feeder 1500. The feeder 1500 may feed power to the first conductive portion 1210, the second conductive portion 1220, or both the first conductive portion 1210 and the second conductive portion 1220, through the first matching circuit 1610. Although FIG. 5 illustrates a single feeder 1500, the feeder 1500 may include a plurality of feeders feeding power to different conductive portions among the plurality of conductive portions 1200.

According to an embodiment, the first matching circuit 1610 may refer to a circuit that is disposed on a path of an electrical signal provided from the feeder 1500 to the first feeding point F1 and/or the second feeding point F2 and is capable of adjusting a frequency of the electrical signal. For example, the first matching circuit 1610 may adjust an impedance or may adjust a resonant frequency to a specified frequency. The first matching circuit 1610 may electrically connect the first conductive portion 1210 and the second conductive portion 1220 to each other.

According to an embodiment, the first switch circuit 1620 may electrically connect the second conductive portion 1220 and the third conductive portion 1230. For example, when the second conductive portion 1220 and the third conductive portion 1230 are electrically connected to each other by the first switch circuit 1620, an electrical path may be formed along the second conductive portion 1220 and the third conductive portion 1230.

According to an embodiment, the first matching circuit 1610 or the second matching circuit 1700, which is an electrical circuit capable of changing impedance, may include an aperture tuner including at least one passive component. For example, the second matching circuit 1700 may include a switch 1710 electrically connectable to the first conductive portion 1210, and at least one capacitor 1720 and/or at least one inductor 1730 electrically connectable to the switch 1710.

According to an embodiment, the second matching circuit 1700 may function to adjust the frequency of the antenna, using a phenomenon electrically resonating at a specific frequency determined based on an impedance value changed by the at least one capacitor 1720 and the at least one inductor 1730. The processor may control the switch 1710 to connect the first conductive portion 1210 to the at least one capacitor 1720 or the at least one inductor 1730 having a specified impedance value, thereby adjusting a resonant frequency of the antenna including the first conductive portion 1210. For example, the second matching circuit 1700 may include a variable capacitor and/or a variable inductor.

According to an embodiment, the second matching circuit 1700 may be electrically connected to a portion of the first conductive portion 1210. The second matching circuit 1700 may be disposed between the first conductive portion 1210 and a ground G to perform a function of adjusting a signal of a specific frequency band to flow to the ground G.

According to an embodiment, the processor may be operatively connected to the feeder 1500 and the first matching circuit 1610. The feeder 1500 may feed power to a specified feeding point F1 or F2.

According to an embodiment, the processor may selectively and electrically connect the first conductive portion 1210 and the second conductive portion 1220 through the first matching circuit 1610 and may selectively and electrically connect the second conductive portion 1220 and the third conductive portion 1230 through the first switch circuit 1620. The first conductive portion 1210, the second conductive portion 1220, and the third conductive portion 1230 may operate as antennas in an electrically disconnected and/or coupled state. The processor may be configured to communicate with an external electronic device through the first conductive portion 1210, the second conductive portion 1220, and the third conductive portion 1230 capable of operating as antennas.

According to an embodiment, the electronic device 1000 may include a first feeding point F1 disposed adjacent to one end 1210a of the first conductive portion 1210 in the first conductive portion 1210 and a second feeding point F2 disposed adjacent to another end 1220b of the second conductive portion 1220 in the second conductive portion 1220. When the feeder 1500 feeds power to the first feeding point F1 and/or the second feeding point F2, an electrical path may be formed along the electrically connected conductive portion. For example, in a state in which the first conductive portion 1210, the second conductive portion 1220, and the third conductive portion 1230 are electrically connected to each other, when feeding power to the first feeding point F 1, a first electrical path P1 from the first feeding point F1 to the other end 1210b of the first conductive portion 1210 and a second electrical path P2 from the first feeding point F1 to one end 1230a of both ends (1230a, 1230b) of the third conductive portion 1230, which is far from the second conductive portion 1220, may be formed. The first conductive portion 1210, the second conductive portion, and the third conductive portion 1230 electrically connected to each other by a current flowing through the first electrical path P1 and the second electrical path P2 may be formed as one antenna. For example, in a state in which the first conductive portion 1210, the second conductive portion 1220, and the third conductive portion 1230 are electrically connected to each other, when feeding power to the second feeding point F2, a third electrical path P3 from the second feeding point F2 to the other end 1210b of the first conductive portion 1210 and a fourth electrical path P4 from the second feeding point F2 to one end 1230a of both ends (1230a, 1230b) of the third conductive portion 1230, which is far from the second conductive portion 1220, may be formed. The first conductive portion 1210, the second conductive portion 1220, and the third conductive portion 1230 electrically connected to each other by a current flowing through the third electrical path P3 and the fourth electrical path P4 may operate as one antenna.

According to an embodiment, in a state in which the first conductive portion 1210, the second conductive portion 1220, and the third conductive portion 1230 are electrically connected to each other, the length of the first electrical path P1 may be different from the length of the second electrical path P2. Referring to FIG. 5, the length of the first electrical path P1 may be shorter than the length of the second electrical path P2. Since the resonant frequency of the antenna is determined based on the length of the antenna, the resonant frequency of the antenna having the first electrical path P1 may be different from the resonant frequency of the antenna having the second electrical path P2. The difference between the length of the first electrical path P1 and the length of the second electrical path P2 may be within a specified range. For example, a frequency range of a signal capable of being transmitted and/or received through an area (e.g., the other end 1210b of the first conductive portion 1210 from the first feeding point F 1 or the second feeding point F2) through which the first electrical path P1 passes may partially overlap a frequency range of a signal capable of being transmitted or received through an area (e.g., the one end 1230a of the third conductive portion 1230 from the first feeding point F1 or the second feeding point F2) through which the second electrical path P2 passes.

According to an embodiment, in a state in which the first conductive portion 1210, the second conductive portion 1220, and the third conductive portion 1230 are electrically connected to each other, the feeder 1500 may feed power to at least one of the first feeding point F 1 and the second feeding point F2, through the first matching circuit 1610. The first matching circuit 1610 may set a point to be fed from the feeder 1500 as the first feeding point F1 or the second feeding point F2. Since the electrical path (the first electrical path P1 and the second electrical path P2) formed when the power is fed to the first feeding point F1 and the electrical path (the third electrical path P3 and the fourth electrical path P4) formed when the power is fed to the second feeding point F2 are different from each other, the resonant frequency and bandwidth of the antenna formed by the first conductive portion 1210, the second conductive portion 1220, and the third conductive portion 1230 may be adjusted. The processor may adjust the resonant frequency of the antenna by controlling the first matching circuit 1610.

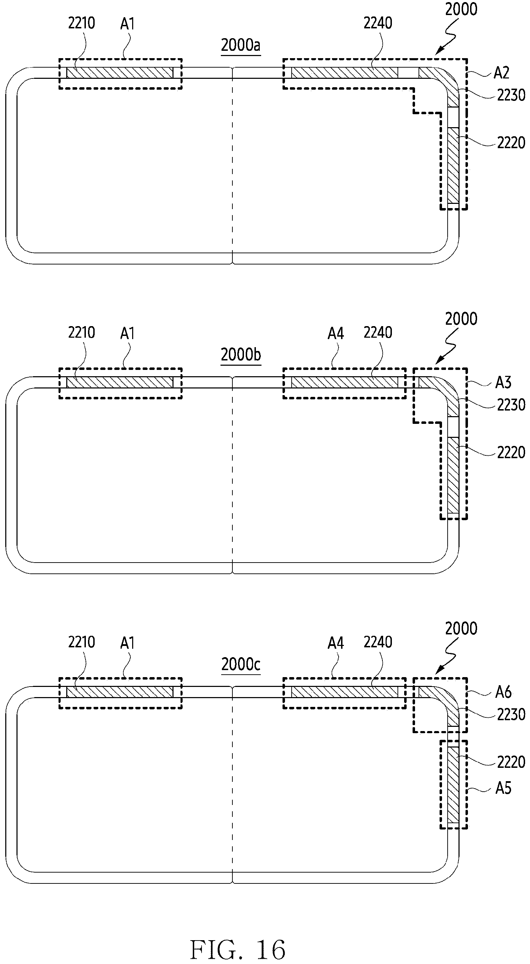

Although only one feeder 1500 is illustrated in FIG. 5, the electronic device 1000 may further include feeders (e.g., a first feeder 1510, a second feeder 1520, a third feeder 1530, and a fourth feeder 1540 of FIG. 16) for feeding power to the conductive portions 1200. The first conductive portion 1210, the second conductive portion 1220, and the third conductive portion 1230 may be selectively electrically connected to each other to form various antennas based on an electrical connection state thereof. For example, in a state in which the first conductive portion 1210, the second conductive portion 1220, and the third conductive portion 1230 are electrically disconnected from each other, the first conductive portion 1210, the second conductive portion 1220, and the third conductive portion 1230 may operate as antennas capable of transmitting and/or receiving signals of different frequency bands, by feeding different signals. Various other embodiments may be possible.

The above-described electronic device 1000 of FIG. 5 describes an electronic device (non-deformable) such as e.g., a bar type, but is not limited thereto, and may be applied to any electronic device including a foldable display and/or an electronic device including a rollable display.

A graph of FIG. 6 shows a first graph 610 indicating a gain according to a frequency of an antenna that may be formed by a first electrical path (e.g., the first electrical path P1 of FIG. 5), and a second graph 620 indicating a gain according to a frequency of the antenna that may be formed by a second electrical path (e.g., the second electrical path P2 of FIG. 5) different from the first electrical path P1. The horizontal axis of the graph indicates the frequency (unit: MHz), and the vertical axis of the graph indicates the gain (unit: dB).

Referring to FIG. 6, the first graph 610 and the second graph 620 may partially overlap each other, and the resonant frequencies of the first graph 610 and the second graph 620 may be different from each other. The first graph 610 may have a resonant frequency a, and the second graph 620 may have another resonant frequency b. Assuming that a signal having a gain greater than or equal to a threshold value T is transmitted and/or received, the bandwidth D1 of the first graph 610 and the bandwidth D2 of the second graph 620 may be different from each other. For example, the lower limit of the bandwidth D1 of the first graph 610 may be less than the lower limit of the bandwidth D2 of the second graph 620, and the upper limit of the bandwidth D2 of the second graph 620 may be greater than the upper limit of the bandwidth D1 of the first graph 610.

The electronic device 1000 according to an embodiment may include an antenna formed by the first conductive portion 1210, the second conductive portion 1220, and the third conductive portion 1230 electrically connected to each other, thereby providing an improved bandwidth. As the first electrical path P1 and the second electrical path P2 are formed along the first conductive portion 1210, the second conductive portion 1220, and the third conductive portion 1230, the first conductive portion 1210, the second conductive portion 1220, and the third conductive portion 1230 may operate as antennas. The antenna may cover both a frequency range of a signal capable of being transmitted and/or received through a conductive portion having a length of the first electrical path and a frequency range of a signal capable of being transmitted and/or received through a conductive portion having a length of the second electrical path. The antenna may have a bandwidth D including both the bandwidth D1 of the first graph 610 and the bandwidth D2 of the second graph 620. Although the first electrical path P1 and the second electrical path P2 have been mainly described in relation to the resonant frequency and bandwidth of the antenna, the description may be applied to the third electrical path P3 and the fourth electrical path P4 in substantially the same manner.

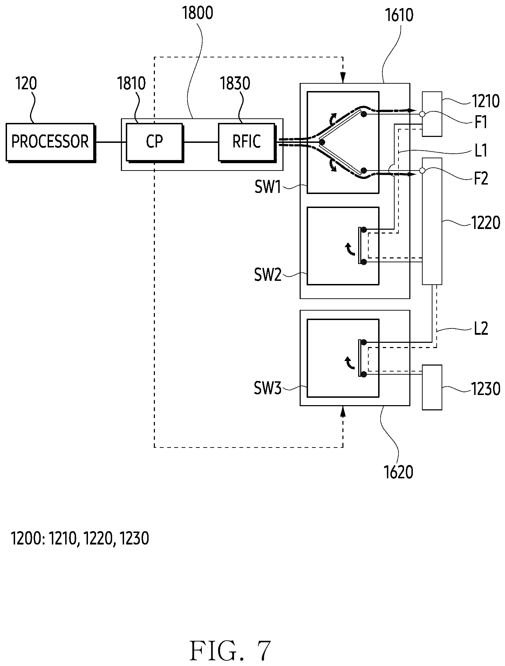

FIG. 7 is an example of a simplified block diagram of a wireless communication module of an electronic device according to an embodiment.

FIG. 7 illustrates a wireless communication module 1800 of the electronic device 1000 fed through one feeder (e.g., the feeder 1500 of FIG. 5). Referring to FIG. 7, the electronic device 1000 according to an embodiment may include the wireless communication module 1800. The wireless communication module 1800 may include a communication processor (CP) 1810 or a radio frequency integrated circuit (RFIC) 1830 for wireless communication. Although not shown herein, the wireless communication module 1800 may include a power amplifier module (MMMB PAM) for amplifying power to support a multi-mode or multi-band (MMMB) and may include a duplexer or multiplexer including a filter for filtering a signal of a specific band.

According to an embodiment, the communication processor 1810 may control any other hardware component included in the wireless communication module 1800 to transmit and/or receive a wireless signal between the electronic device 1000 and an external electronic device. For example, in response to receiving a request to transmit data to the external electronic device from the processor 120, the communication processor 1810 may output an electrical signal (e.g., a digital data signal) having a frequency band of a baseband based on the data to the RFIC 1830.

According to an embodiment, the electronic device 1000 may include a first matching circuit (e.g., the first matching circuit 1610 of FIG. 5) and a first switch circuit (e.g., the first switch circuit 1620 of FIG. 5) capable of adjusting an electrical connection state of the conductive portions 1200. According to an embodiment, the electronic device 1000 may include the first matching circuit 1610 configured to electrically connect the first conductive portion 1210 and the second conductive portion 1220, and the first switch circuit 1620 configured to electrically connect the second conductive portion 1220 and the third conductive portion 1230. In an embodiment, the first matching circuit 1610 may be referred to as a tuner.

According to an embodiment, when transmitting and/or receiving a wireless signal, the first matching circuit 1610 may provide an electrical path for transmitting a wireless signal provided from the wireless communication module 1800 to the first conductive portion 1210 and/or the second conductive portion 1220.

According to an embodiment, the first matching circuit 1610 may include a first switch SW1 and a second switch SW2. The first switch SW1 may selectively and electrically connect the wireless communication module 1800 to the first feeding point F1 and/or the second feeding point F2. The second switch SW2 may selectively and electrically connect the first conductive portion 1210 and the second conductive portion 1220.

According to an embodiment, the first switch circuit 1620 may include a third switch SW3 configured to electrically connect the second conductive portion 1220 and the third conductive portion 1230.

For example, the first switch SW1 may electrically connect the wireless communication module 1800 to the first feeding point F1 of the first conductive portion 1210 and/or the second feeding point F2 of the second conductive portion 1220, the second switch SW2 may electrically connect the first conductive portion 1210 and the second conductive portion 1220, and the third switch SW3 may electrically connect the second conductive portion 1220 and the third conductive portion 1230. The feed signal may be fed to the first feeding point F1 and/or the second feeding point F2 through the first switch SW1. An electrical connection path L1 between the first conductive portion 1210 and the second conductive portion 1220 may be formed through the second switch SW2. An electrical connection path L2 between the second conductive portion 1220 and the third conductive portion 1230 may be formed through the third switch SW3.

According to an embodiment, in a state in which the first conductive portion 1210, the second conductive portion 1220, and the third conductive portion 1230 are electrically connected to each other through the first matching circuit 1610 and the first switch circuit 1620, a wireless signal may be transmitted to and/or received from an external electronic device via the first conductive portion 1210, the second conductive portion 1220, and the third conductive portion 1230.

According to an embodiment, the first conductive portion 1210 and the second conductive portion 1220 may be electrically connected by a closed operation of the second switch SW2 of the first matching circuit 1610, and the second conductive portion 1220 and the third conductive portion 1230 may be electrically disconnected by an opened operation of the third switch SW3 of the first switch circuit 1620. In a state of the first conductive portion 1210 and the second conductive portion 1220 being electrically connected and the third conductive portion 1230 being electrically disconnected from the second conductive portion 1220, the wireless signal may be transmitted to and/or received from the external electronic device through the first conductive portion 1210 and the second conductive portion 1220.

According to an embodiment, when receiving a wireless signal, the first matching circuit 1610 may provide an electrical path for transmitting the wireless signal received from the external electronic device to the wireless communication module 1800.

For example, when the first conductive portion 1210 or the second conductive portion 1220 is electrically connected through the first matching circuit 1610, the wireless signal may be transmitted to the RFIC 1830 through the first conductive portion and/or the second conductive portion 1220. In a state in which the first switch circuit 1620 electrically connects the second conductive portion 1220 and the third conductive portion 1230, the wireless signal may be received from the external electronic device through the first conductive portion 1210, the second conductive portion 1220, and the third conductive portion 1230.

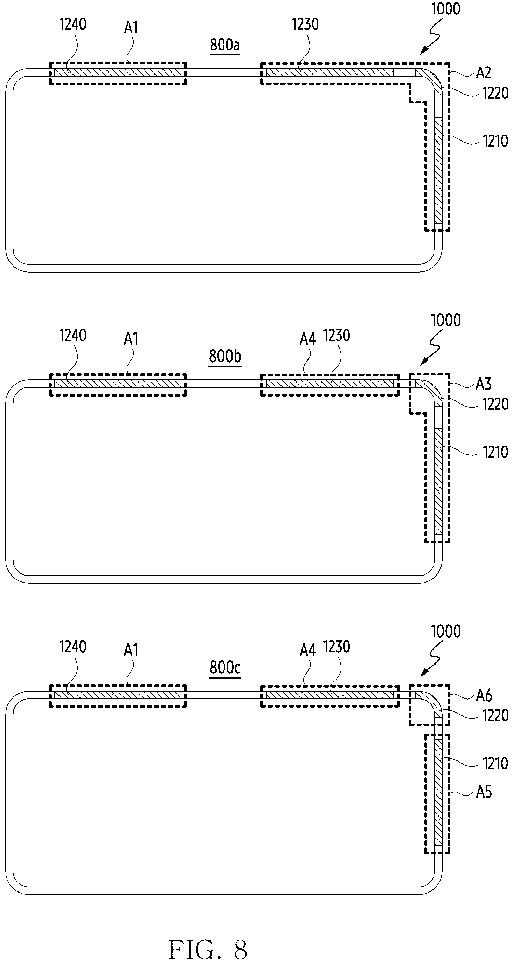

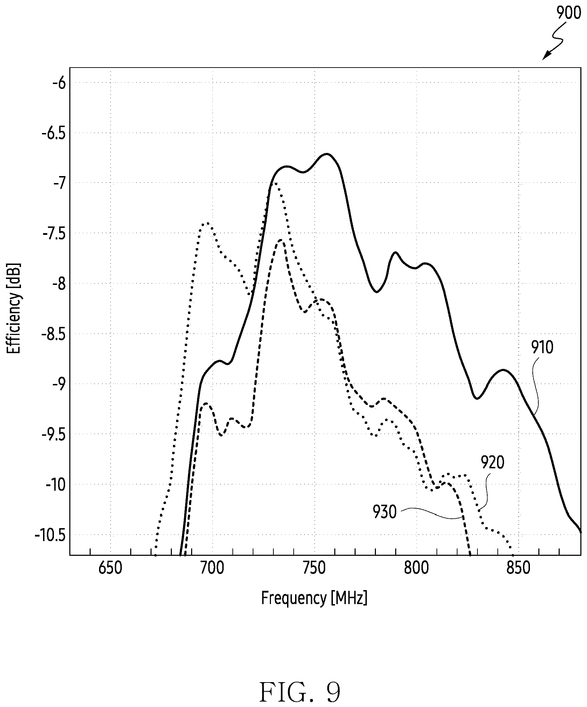

FIG. 8 illustrates examples of antennas formed by connecting conductive portions of an electronic device according to an embodiment. FIG. 9 is a graph illustrating radiation characteristics of an antenna formed by connection of conductive portions of an electronic device according to an embodiment.

Referring to FIG. 8, the electronic device (e.g., the electronic device 1000 of FIG. 4) according to an embodiment may include a first antenna A1 and a second antenna A2. The first antenna A1 may include at least a portion of a fourth conductive portion (e.g., the fourth conductive portion 1240 of FIG. 4). The second antenna A2 may be formed based on an electrical connection state of the first conductive portion (e.g., the first conductive portion 1210 of FIG. 4), the second conductive portion (e.g., the second conductive portion 1220 of FIG. 4), and the third conductive portion (e.g., the third conductive portion 1230 of FIG. 4).

A state 800a of FIG. 8 illustrates a first state in which the first conductive portion 1210, the second conductive portion 1220, and the third conductive portion 1230 are electrically connected to each other. In the first state, the first conductive portion 1210, the second conductive portion 1220, and the third conductive portion 1230 may operate as one second antenna A2.

A state 800b of FIG. 8 illustrates a second state in which the first conductive portion 1210 and the second conductive portion 1220 are electrically connected, and the second conductive portion 1220 and the third conductive portion 1230 are electrically disconnected. In the second state, the first conductive portion 1210 and the second conductive portion 1220 may operate as a third antenna A3, and the third conductive portion 1230 may operate as a fourth antenna A4 different from the third antenna A3.

A state 800c of FIG. 8 illustrates a third state in which the first conductive portion 1210, the second conductive portion 1220, and the third conductive portion 1230 are electrically disconnected from each other. In the third state, the first conductive portion 1210 may operate as a fifth antenna A5, the third conductive portion 1230 may operate as the fourth antenna A4, and the second conductive portion 1220 may operate as a sixth antenna A6.

According to an embodiment, in the first state, the second state, and the third state, the first antenna A1 may receive a signal within a frequency range of a low band (e.g., 1 GHz or less). According to an embodiment, the first antenna A1 may be configured to receive a first signal in a downlink frequency range (e.g., 758 MHz to 803 MHz) of a first frequency band (e.g., n28 of 3GPP standard) and a second signal in a downlink frequency range (e.g., 791 MHz to 821 MHz) of a second frequency band (e.g., B20 of the 3GPP standard), from an external electronic device. For example, when the first antenna A1 is configured to support the first signal, the second signal, and a third signal in an uplink frequency range (e.g., 703 MHz to 748 MHz) of the first frequency band, in order to support EN-DC (E-UTRA-NR Dual Connectivity) supporting dual connectivity between E-UTRA (Evolved Universal Terrestrial Radio Access) and NR (New Radio), the bandwidth (e.g., 703 MHz to 821 MHz) to be covered by the first antenna A1 may be relatively large. When the first antenna A1 is configured to support the first signal, the second signal, and the third signal, the transmission and/or reception performance of the signal may decrease in a situation that the first antenna A1 does not cover the entire band of the corresponding signals.

In an embodiment, in the first state, the second state, and the third state, the first antenna A1 may function as a reception antenna of a low band. For example, the downlink frequency range of the first frequency band and the downlink frequency range of the second frequency band, which may be supported by the first antenna A1, may partially overlap. According to an embodiment, as the downlink frequency range of the first frequency band and the downlink frequency range of the second frequency band, as supported by the first antenna A1, partially overlap each other, the band to be covered by the first antenna A1 may be reduced.

According to an embodiment, the first antenna A1 having a relatively small effective volume of the radiator may support the first signal and the second signal, and the second antenna A2 capable of adjusting the effective volume of the radiator may support the first signal, the second signal, the third signal, and the fourth signal within the uplink frequency range (e.g., 832 MHz to 862 MHz) of the second frequency band. Then, it is possible to support the first signal, the second signal, the third signal, and the fourth signal through the second antenna A2 capable of adjusting the effective volume of the radiator by the first conductive portion 1210, the second conductive portion 1220, and the third conductive portion 1230, the transmission and/or reception performance of the signal may be improved.

According to an embodiment, the first conductive portion 1210, the second conductive portion 1220, and the third conductive portion 1230 may operate as other antennas (e.g., the second antenna A2, the third antenna A3, the fourth antenna A4, the fifth antenna A5, and the sixth antenna A6), based on the first state, the second state, and the third state, and may transmit and/or receive signals in multiple bands.

According to an embodiment, in the first state, the second state, and the third state, the second antenna A2 may transmit and/or receive a signal within a frequency range of a low band, a signal within a frequency range of a middle band, and a signal within a frequency range of a high band. According to an embodiment, since the electronic device 1000 may transmit and/or receive signals in a wide frequency band, the electronic device 1000 may provide EN-DC. For example, in the third state, the electronic device 1000 may transmit and/or receive signals having a frequency in a 5G band (e.g., 3.5 GHz). In the third state, to transmit and/or receive a signal having a frequency in an LTE band (e.g., 1 GHz or less), the electronic device 1000 may switch to the first state by controlling the first matching circuit 1610 and the first switch circuit 1620.

For example, in the first state, the second antenna A2 may be configured to receive the first signal and the second signal from an external electronic device, and may be configured to transmit the third signal in an uplink frequency range (e.g., 703 MHz to 748 MHz) of the first frequency band and the fourth signal in an uplink frequency range (e.g., 832 MHz to 862 MHz) of the second frequency band, to the external electronic device. The second antenna A2 may additionally transmit and/or receive signals within a frequency range of a middle band and/or a high band. Since the length of the second antenna A2 may be formed longer than the length of the first antenna A1, a wide bandwidth may be secured.

For example, in the second state, the third antenna A3 may be configured to receive the first signal and the second signal from an external electronic device and may be configured to transmit the third signal and the fourth signal to the external electronic device. The third antenna A3 may additionally transmit and/or receive signals within a frequency range of a middle band and/or a high band. The fourth antenna A4 may transmit and/or receive a fifth signal in a third frequency band distinguished from the first frequency and the second frequency.

For example, in the third state, the fifth antenna A5 may be configured to receive the first signal and the second signal from an external electronic device and may be configured to transmit the third signal and the fourth signal to the external electronic device. The fifth antenna A5 may additionally transmit and/or receive signals within a frequency range of a middle band and/or a high band. The fourth antenna A4 may transmit and/or receive the fifth signal in a third frequency band distinguished from the first frequency and the second frequency. The sixth antenna A6 may transmit and/or receive a sixth signal in a fourth frequency band distinguished from the first frequency, the second frequency, and the third frequency. The fifth signal and the sixth signal may at least partially overlap each other. Since a length of the sixth antenna A6 may be formed to be relatively short, signals in a relatively high frequency band may be transmitted and/or received.

A graph 900 illustrated in FIG. 9 shows a first graph 910 indicating a radiation characteristic of the second antenna A2 in the first state, a second graph 920 indicating a radiation characteristic of the third antenna A3 in the second state, and a third graph 930 indicating a radiation characteristic of the fifth antenna A5 in the third state. The horizontal axis of the graph 900 denotes a frequency (unit: MHz), and the vertical axis of the graph 900 denotes a gain (unit: dB).

Referring to FIG. 9, the gain of the first graph 910 may be the highest, and the bandwidth of the first graph 910 may be the widest. In the first state, the first conductive portion 1210, the second conductive portion 1220, and the third conductive portion 1230 are electrically connected to the second antenna A2, and thus the second antenna A2 may have the longest electrical path to secure the largest effective volume of the antenna radiator.

The second graph 920 may have a higher gain and a wider bandwidth than that of the third graph 930. In the second state, the third antenna A3 may have an electrical path longer than that of the fifth antenna A5 in the third state, and therefore, it may secure a larger effective volume of the antenna radiator and transmit and/or receive a signal in an additional band.

The electronic device 1000 according to an embodiment may implement various types of antennas by selectively connecting conductive portions (e.g., the conductive portions 1200 of FIG. 4) forming a segmented structure of the housing 1100. Since the antenna may transmit and/or receive signals in multiple bands, the antenna may cover signals in a wider range of frequency band.

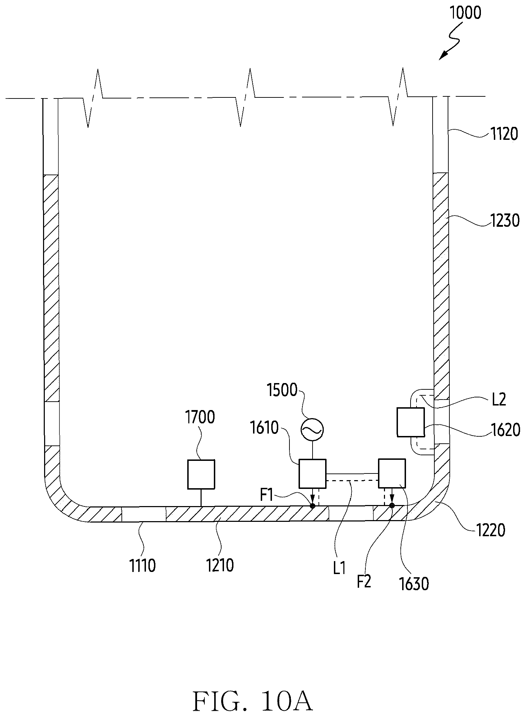

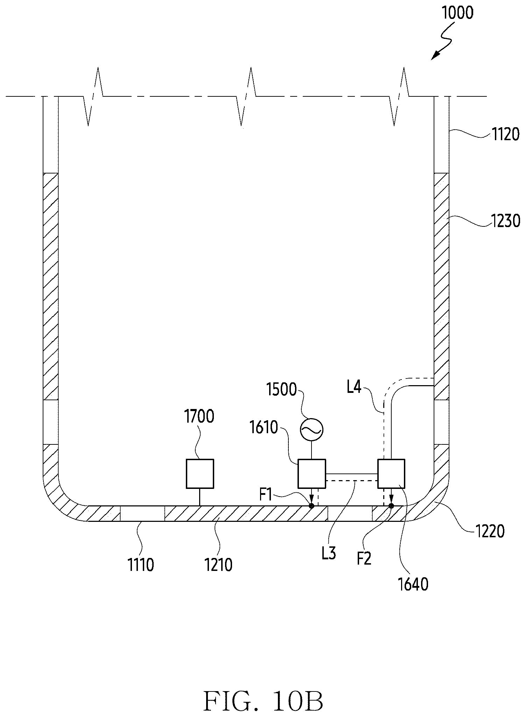

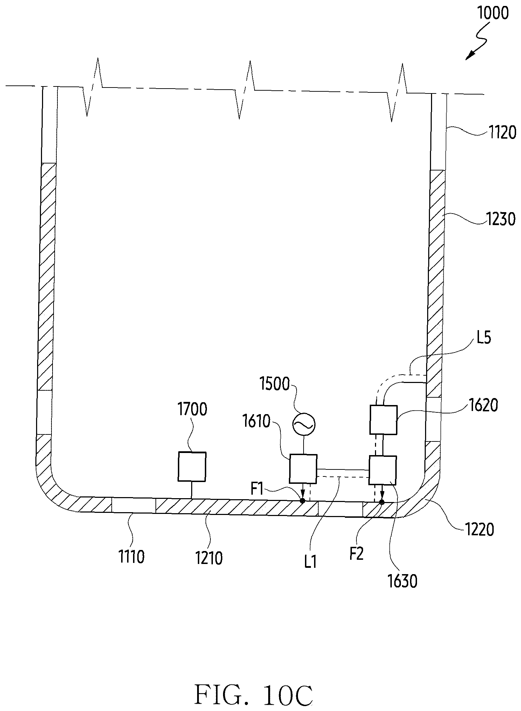

FIGS. 10A, 10B, and 10C each illustrate examples of a connection relationship between a feeder and conductive portions of an electronic device according to an embodiment.

Referring to FIGS. 10A, 10B, and 10C, the electronic device 1000 according to an embodiment may form an antenna by adjusting various electrical connection states of the first conductive portion 1210, the second conductive portion 1220, and the third conductive portion 1230. According to an embodiment, when there are not many bands of signals supported through the first conductive portion 1210, the second conductive portion 1220, and the third conductive portion 1230, the electronic device 1000 may feed power through one feeder 1500. For example, when the electronic device 1000 supports only signals within a frequency range of a low band and a middle band, the electronic device 1000 may feed power through one feeder 1500.

Referring to FIG. 10A, the electronic device 1000 according to an embodiment may include a first matching circuit 1610 for transferring a feeding signal to a first feeding point F1 disposed in the first conductive portion 1210 and/or a second feeding point F2 disposed in the second conductive portion 1220, a first switch circuit 1620 configured to electrically connect the second conductive portion 1220 and the third conductive portion 1230, and a second switch circuit 1630 configured to electrically connect the first conductive portion 1210 and the second conductive portion 1220. The second switch circuit 1630 may be electrically connected to the first matching circuit 1610 electrically connected to the first conductive portion 1210, and may be electrically connected to the second conductive portion 1220, thereby electrically connecting the first conductive portion 1210 and the second conductive portion 1220.

According to an embodiment, a feeder 1500 may feed power to a first feeding point F1 and/or a second feeding point F2 through the first matching circuit 1610. The feeder 1500 may feed power to the first feeding point F1, the second feeding point F2, or both the first feeding point F 1 and the second feeding point F2, through the first matching circuit 1610. The first matching circuit 1610 may be electrically connected to the first conductive portion 1210. The first conductive portion 1210 may be fed through the feeder 1500 to transmit a signal to an external electronic device and may operate as an antenna capable of receiving a signal from the external electronic device.

According to an embodiment, the second switch circuit 1630 may be electrically connected to the first matching circuit 1610 and may be electrically connected to the second conductive portion 1220. The second switch circuit 1630 may be electrically connected to the second conductive portion 1220 to electrically connect the first conductive portion 1210 and the second conductive portion 1220. When the first conductive portion 1210 and the second conductive portion 1220 are electrically connected to each other by the second switch circuit 1630, an electrical connection path L1 between the first conductive portion 1210 and the second conductive portion 1220 may be formed. When the first conductive portion 1210 and the second conductive portion 1220 are electrically disconnected from each other by the second switch circuit 1630, the electrical connection path L1 between the first conductive portion 1210 and the second conductive portion 1220 may not be formed.

According to an embodiment, the first switch circuit 1620 may selectively and electrically connect the second conductive portion 1220 and the third conductive portion 1230. When the second conductive portion 1220 and the third conductive portion 1230 are electrically connected to each other by the first switch circuit 1620, an electrical connection path L2 between the second conductive portion 1220 and the third conductive portion 1230 may be formed. When the second conductive portion 1220 and the third conductive portion 1230 are electrically disconnected from each other by the first switch circuit 1620, the electrical connection path L2 between the second conductive portion 1220 and the third conductive portion 1230 may not be formed.

According to an embodiment, the processor (e.g., the processor 120 of FIG. 1) may control the first switch circuit 1620 and the second switch circuit 1630 to adjust the electrical connection states of the first conductive portion 1210, the second conductive portion 1220, and the third conductive portion 1230.

For example, in a state (e.g., 800a of FIG. 8) in which the first conductive portion 1210 and the second conductive portion 1220 are electrically connected to each other by the second switch circuit 1630, and the second conductive portion 1220 and the third conductive portion 1230 are electrically connected to each other by the first switch circuit 1620, the electrical connection path L1 between the first conductive portion 1210 and the second conductive portion 1220 and the electrical connection path L2 between the second conductive portion 1220 and the third conductive portion 1230 may be formed. When the feeder 1500 feeds power to the first feeding point F 1, the first conductive portion 1210, the second conductive portion 1220, and the third conductive portion 1230 that are electrically connected to each other may operate as an antenna capable of transmitting and/or receiving signals.

For example, in a state (e.g., the state 800b of FIG. 8) in which the first conductive portion 1210 and the second conductive portion 1220 are electrically connected to each other by the second switch circuit 1630, and the second conductive portion 1220 and the third conductive portion 1230 are electrically disconnected from each other by the first switch circuit 1620, the electrical connection path L1 between the first conductive portion 1210 and the second conductive portion 1220 may be formed, and the electrical connection path L2 between the second conductive portion 1220 and the third conductive portion 1230 may not be formed. When the feeder 1500 feeds power to the first feeding point F 1, the first conductive portion 1210 and the second conductive portion 1220 electrically connected to each other may operate as an antenna capable of transmitting and/or receiving signals.

For example, in a state (e.g., the state 800c of FIG. 8) in which the first conductive portion 1210 and the second conductive portion 1220 are electrically disconnected from each other by the second switch circuit 1630, and the second conductive portion 1220 and the third conductive portion 1230 are electrically disconnected from each other by the first switch circuit 1620, both the electrical connection path L1 between the first conductive portion 1210 and the second conductive portion 1220 and the electrical connection path L2 between the second conductive portion 1220 and the third conductive portion 1230 may not be formed. When the feeder 1500 feeds power to the first feeding point F 1, the first conductive portion 1210 may operate as an antenna capable of transmitting and/or receiving a signal.

The form of operation of the antenna described with reference to FIG. 10A may be applied substantially the same to the electronic device 1000 illustrated in FIGS. 10B and 10C.

Referring to FIG. 10B, the electronic device 1000 according to an embodiment may include a first matching circuit 1610 for transferring a feeding signal to a first feeding point F1 disposed in the first conductive portion 1210 and/or a second feeding point F2 disposed in the second conductive portion 1220, or a third switch circuit 1640 capable of electrically connecting the first conductive portion 1210 and the second conductive portion 1220 and capable of electrically connecting the second conductive portion 1220 and the third conductive portion 1230.

According to an embodiment, the third switch circuit 1640 may selectively and electrically connect the first conductive portion 1210 and the second conductive portion 1220. The third switch circuit 1640 may be electrically connected to the first matching circuit 1610 and may be electrically connected to the second conductive portion 1220. When the first matching circuit 1610 and the third switch circuit 1640 electrically connect the second conductive portion 1220 and the first conductive portion 1210, an electrical connection path L3 between the first conductive portion 1210 and the second conductive portion 1220 may be formed. When the third switch circuit 1640 electrically disconnects the first conductive portion 1210 from the second conductive portion 1220, the electrical connection path L3 between the first conductive portion 1210 and the second conductive portion 1220 may not be formed.

According to an embodiment, the third switch circuit 1640 may selectively and electrically connect the second conductive portion 1220 and the third conductive portion 1230. The third switch circuit 1640 may electrically connect the second conductive portion 1220 and the third conductive portion 1230. When the third switch circuit 1640 electrically connects the third conductive portion 1230 and the second conductive portion 1220, an electrical connection path L4 may be formed between the second conductive portion 1220 and the third conductive portion 1230. When the third switch circuit 1640 electrically disconnects the second conductive portion 1220 from the third conductive portion 1230, the electrical connection path L4 between the second conductive portion 1220 and the third conductive portion 1230 may not be formed.

According to an embodiment, the processor (e.g., the processor 120 of FIG. 1) may control the third switch circuit 1640 to adjust the electrical connection state of the first conductive portion 1210, the second conductive portion 1220, and the third conductive portion 1230.

Referring to FIG. 10C, the electronic device 1000 according to an embodiment may include a first matching circuit 1610 for transferring a feeding signal to a first feeding point F1 disposed in the first conductive portion 1210 and/or a second feeding point F2 disposed in the second conductive portion 1220, a first switch circuit 1620 configured to electrically connect the second conductive portion 1220 and the third conductive portion 1230, and a second switch circuit 1630 configured to electrically connect the first conductive portion 1210 and the second conductive portion 1220.

According to an embodiment, the first switch circuit 1620 may selectively and electrically connect the second conductive portion 1220 and the third conductive portion 1230. The first switch circuit 1620 may be electrically connected to the second switch circuit 1630 and may be electrically connected to the third conductive portion 1230. When the first switch circuit 1620 is electrically connected to the third conductive portion 1230, an electrical connection path L5 may be formed between the second conductive portion 1220 and the third conductive portion 1230.

According to an embodiment, the processor (e.g., the processor 120 of FIG. 1) may control the first switch circuit 1620 and the second switch circuit 1630 to adjust the electrical connection state of the first conductive portion 1210, the second conductive portion 1220, and the third conductive portion 1230.

The electronic device 1000 illustrated in FIGS. 5, 10A, 10B, and 10C includes one feeder 1500, but the description described with reference to FIGS. 5, 10A, 10B, and 10C may be applied substantially the same to the electronic device 1000 including a plurality of feeders 1500.

The electronic device 1000 of FIGS. 10A, 10B, and 10C described above describes an electronic device (non-deformable) such as e.g., a bar type, but is not limited thereto, and may be also applied to an electronic device including a foldable display and/or an electronic device including a rollable display.

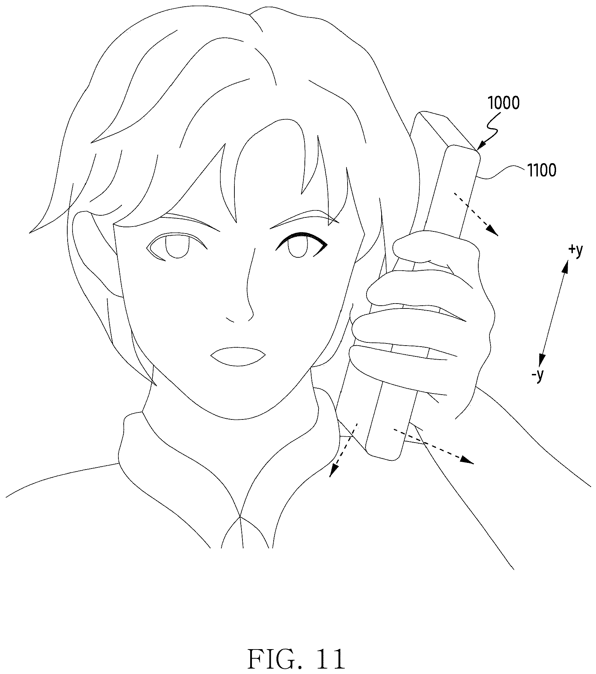

FIG. 11 illustrates an example of a use state of an electronic device according to an embodiment.

Referring to FIG. 11, an electronic device 1000 may be referred to as a mobile device (e.g., a smart phone or a cellular phone) that can be held and used by a user by hand. When using the electronic device 1000, the user may hold and use a side (e.g., the third surface (or side portion) 300B of FIG. 3A) of the housing 1100 in hand. The user of the electronic device 1000 may hold and use the electronic device 1000 close to his/her head to receive a voice signal from an external electronic device and transmit a voice signal to the external electronic device. An antenna radiator (e.g., the first antenna A1 of FIG. 7) disposed in +y direction of the housing 1100 may be greatly influenced by the user's head. When the electronic device 1000 contacts the user's head and hand, an impedance value of the antenna radiator may be changed, and a sensitivity of the antenna radiator to a wireless signal of a specified frequency band may deteriorate due to a change in the impedance value. For example, when the antenna radiator disposed in the +y direction of the housing 1100 performs both the downlink operation and the uplink operation of the wireless signal, the performance of the wireless signal may deteriorate due to interaction with the user's body. However, when the power applied to the antenna radiator is increased to prevent such degradation of the performance, a specific absorption rate (SAR) by the body may be increased.

According to an embodiment, the electronic device 1000 may selectively and electrically connect conductive portions (e.g., the conductive portions 1200 of FIG. 4) disposed in the -y direction of the housing 1100, thereby increasing the size of the antenna radiator (e.g., the second antenna A2 of FIG. 7). Since the antenna radiator disposed in the -y direction may have an increased effective volume of the radiation body, it is possible to reduce performance degradation due to interaction with the user's body when performing downlink and uplink operations of the wireless signal. For example, the antenna radiator disposed in the -y direction may transmit and receive a signal within the uplink frequency range and a signal within the downlink frequency range of different frequency bands (e.g., n28 and B20 of 3GPP standard). According to an embodiment, the antenna radiator disposed in the -y direction may cover signals of multiple bands, and therefore the band to be covered by the antenna radiator disposed in the +y direction may be relatively reduced. The electronic device 1000 according to an embodiment may reduce degradation in the antenna performance caused by a user's body (e.g., a hand or a head).

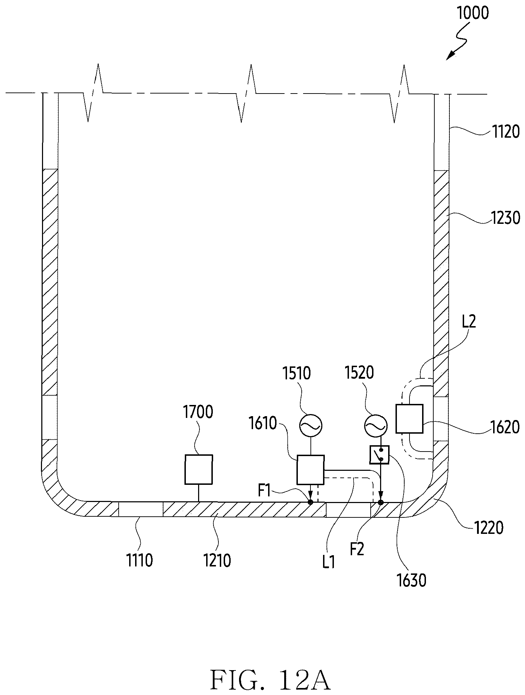

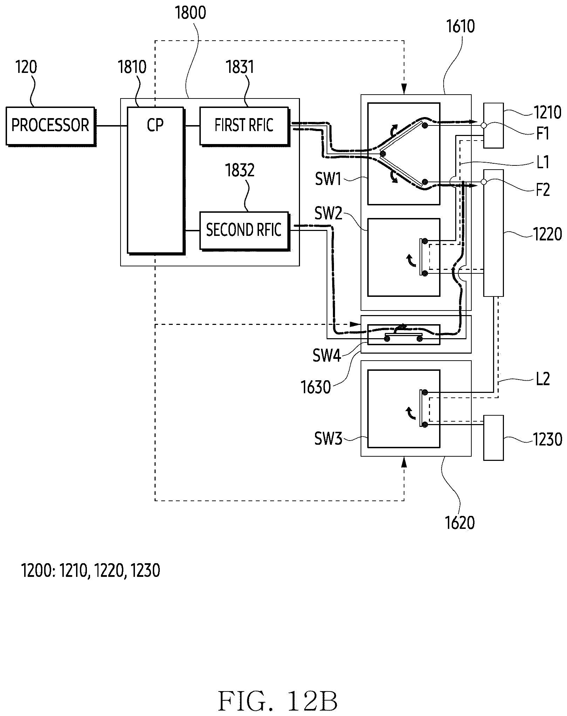

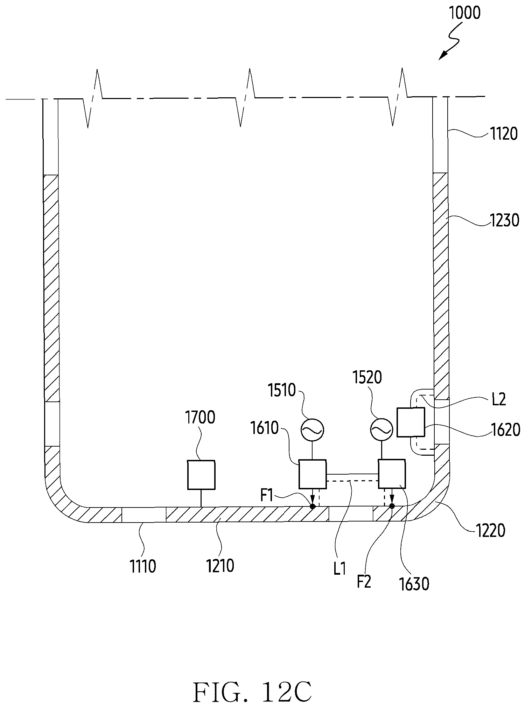

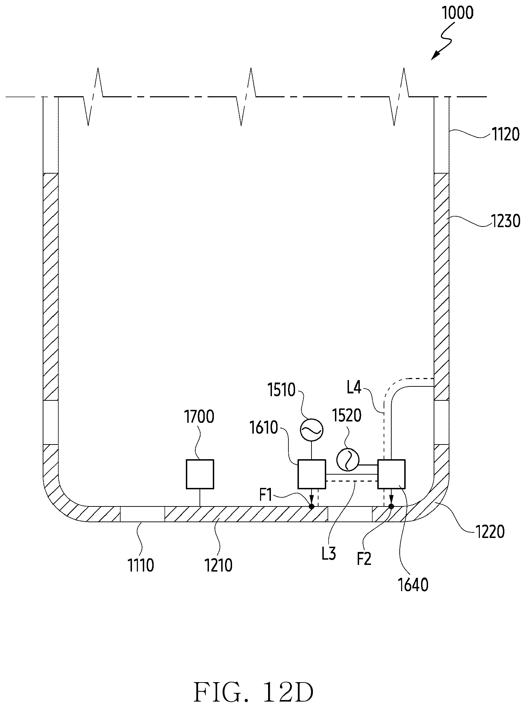

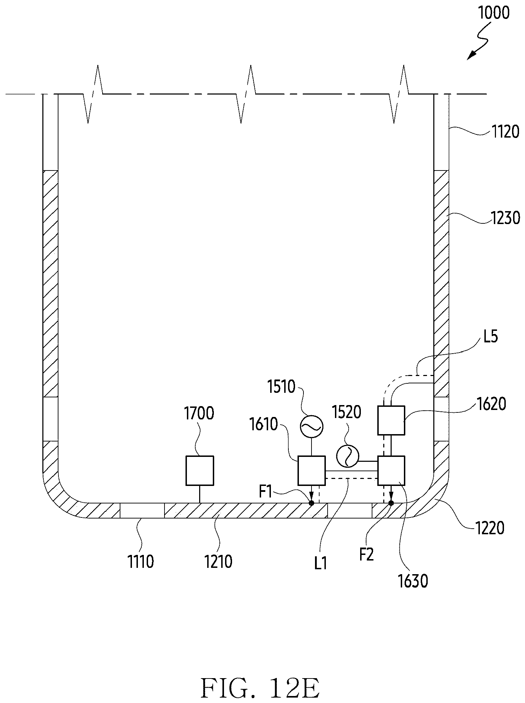

FIG. 12A illustrates an example of a connection relationship between a feeder and conductive portions of an electronic device according to an embodiment. FIG. 12B is an example of a simplified block diagram of a wireless communication module of the electronic device illustrated in FIG. 12A. FIGS. 12C, 12D, and 12E illustrate examples of a connection relationship between a feeder and conductive portions of an electronic device according to an embodiment.

Referring to FIGS. 12A, 12C, 12D, and 12E, when the electronic device 1000 according to an embodiment supports a multi-band signal through the first conductive portion 1210, the second conductive portion 1220, and the third conductive portion 1230, the electronic device 1000 may feed power through two feeders (1510, 1520). For example, the electronic device 1000 may perform wireless communication in both the low band and the middle band with a first feeder 1510, and may perform wireless communication in the high band and the NR band with the second feeder 1520. The electronic device 1000 illustrated in FIGS. 12A, 12C, 12D, and 12E may further include a second feeder 1520 that may feed power to a second feeding point F2, compared to the electronic device 1000 illustrated in FIGS. 5, 10A, 10B, and 10C.

According to an embodiment, the electronic device 1000 may include a first matching circuit 1610 for transmitting a feeding signal to the first feeding point F1 disposed in the first conductive portion 1210 and/or the second feeding point F2 disposed in the second conductive portion 1220, a first switch circuit 1620 configured to electrically connect the second conductive portion 1220 and the third conductive portion 1230, and a second switch circuit 1630 configured to electrically connect the second feeder 1520 and the second conductive portion 1220.

According to an embodiment, the second feeder 1520 may feed power to the second feeding point F2 disposed in the second conductive portion 1220 through the second switch circuit 1630.

Referring to FIG. 12A, a power feeding from the second feeder 1520 may be cut off by the second switch circuit 1630. For example, as the switch included in the second switch circuit 1630 electrically connected to the second conductive portion 1220 is open-circuited, the power feeding may not be performed from the second feeder 1520 to the second feeding point F2.

According to an embodiment, the first conductive portion 1210 and the second conductive portion 1220 may be electrically connected via the first matching circuit 1610. The first matching circuit 1610 may be controlled to feed power from the first feeder 1510 to the first conductive portion 1210 and/or the second conductive portion 1220. An antenna may be formed through the first matching circuit 1610 and/or the first switch circuit 1620. For example, the first conductive portion 1210 and the second conductive portion 1220 may be electrically connected to each other through the first matching circuit 1610, and an electrical connection path L1 may be then formed between the first conductive portion 1210 and the second conductive portion 1220. The second conductive portion 1220 and the third conductive portion 1230 may be electrically connected to each other through the first switch circuit 1620, and an electrical connection path L2 may be then formed between the second conductive portion 1220 and the third conductive portion 1230. When feeding power to the first feeding point F1, the first conductive portion 1210, the second conductive portion 1220, and the third conductive portion 1230 electrically connected to each other may operate as antennas.

The description made with reference to FIG. 7 may be applied substantially the same to the wireless communication module 1800 illustrated in FIG. 12B. Referring to FIG. 12B, the electronic device 1000 according to an embodiment may include a wireless communication module 1800 including a communication processor 1810, a first RFIC 1831, and a second RFIC 1832.

According to an embodiment, the communication processor 1810 may establish a communication channel of a specified frequency band and support wireless communication, through the first RFIC 1831. For example, the communication processor 1810 may support wireless communication in a low band and/or a middle band through the first RFIC 1831. The communication processor 1810 may establish a communication channel of a frequency band distinct from the specified frequency and support wireless communication, through the second RFIC 1832. For example, the communication processor 1810 may support wireless communication in a high band and/or an NR band through the second RFIC 1832.

According to an embodiment, the first conductive portion 1210 may be fed from the first RFIC 1831 through the first matching circuit 1610, and the second conductive portion 1220 may be fed from the second RFIC 1832 through the second switch circuit 1630.

For example, the first switch SW1 of the first matching circuit 1610 may electrically connect the first RFIC 1831 and the first conductive portion 1210 to transfer a feed signal from the first RFIC 1831 to the first feeding point F 1. The first conductive portion 1210 and the second conductive portion 1220 may be electrically connected through the second switch SW2, and an electrical connection path L1 between the first conductive portion 1210 and the second conductive portion 1220 may be formed through the second switch SW2. A fourth switch SW4 of the second switch circuit 1630 may electrically connect the second RFIC 1832 and the second conductive portion 1220 to transfer a feeding signal from the second RFIC 1832 to the second feeding point F2. The second conductive portion 1220 and the third conductive portion 1230 may be electrically connected to each other via the third switch SW3 of the first switch circuit 1620. An electrical connection path L2 between the second conductive portion 1220 and the third conductive portion 1230 may be formed through the third switch SW3.

Referring to FIG. 12C, the second switch circuit 1630 may control an electrical connection between the second conductive portion 1220 and the first matching circuit 1610, or may transfer a feeding signal from the second feeder 1520 to the second feeding point F2. For example, the second feeder 1520 may feed power to the second feeding point F2 through the second switch circuit 1630. For example, the second switch circuit 1630 may not electrically connect the second conductive portion 1220 and the first matching circuit 1610, and may electrically connect the second feeder 1520 and the second conductive portion 1220 such that the second feeder 1520 feeds power to the second feeding point F2. The electronic device 1000 according to an embodiment may transmit and/or receive signals of different frequency bands, using different feeding signals.

Referring to FIG. 12D, the electronic device 1000 according to an embodiment may include a third switch circuit 1640 configured to electrically connect the first conductive portion 1210 and the second conductive portion 1220, to electrically connect the second conductive portion 1220 and the third conductive portion 1230, or to allow the second feeder 1520 to feed power to the second conductive portion 1220 or the third conductive portion 1230.

According to an embodiment, the first conductive portion 1210 and the second conductive portion 1220 may be electrically connected to each other by the third switch circuit 1640, thereby forming an electrical connection path L3 between the first conductive portion 1210 and the second conductive portion 1220. According to an embodiment, the second conductive portion 1220 and the third conductive portion 1230 may be electrically connected by the third switch circuit 1640, thereby forming an electrical connection path L4 between the second conductive portion 1220 and the third conductive portion 1230.

According to an embodiment, the third switch circuit 1640 may transfer a feed signal from the second feeder 1520 to the second feeding point F2. According to an embodiment, the first feeder 1510 may feed power to the first feeding point F 1 through the first matching circuit 1610, and the second feeder 1520 may feed power to the second feeding point F2 through the third switch circuit 1640. For example, in a state in which the first conductive portion 1210 and the second conductive portion 1220 are electrically connected through the first matching circuit 1610, and the second conductive portion 1220 and the third conductive portion 1230 are connected through the third switch circuit 1640, when power is fed to the first feeding point F1 and the second feeding point F2, the first conductive portion 1210, the second conductive portion 1220, and the third conductive portion 1230 electrically connected to each other may operate as antennas.

Referring to FIG. 12E, the electronic device 1000 according to an embodiment may include a first switch circuit 1620 configured to selectively and electrically connect the second switch circuit 1630 and the third conductive portion 1230. The first switch circuit 1620 may be electrically connected to the second switch circuit 1630 and may be electrically connected to the third conductive portion 1230. When the first switch circuit 1620 electrically connects the third conductive portion 1230 and the second switch circuit 1630, and the second switch circuit 1630 electrically connects the second conductive portion 1220 to the first switch circuit 1620, an electrical connection path L5 may be formed between the second conductive portion 1220 and the third conductive portion 1230. According to an embodiment, the second switch circuit 1630 may transfer a feeding signal from the second feeder 1520 to the second feeding point F2.

The descriptions made with reference to FIGS. 9A, 9B, and 9C may be also applied substantially the same to the case where the electronic device 1000 according to an embodiment includes the first feeder 1510 and the second feeder 1520.

The electronic device 1000 of FIGS. 12A, 12B, 12C, 12D, and 12E described above describes for a basic type of electronic device such as e.g., a bar type, but is not limited thereto, and may be also applied to an electronic device including a foldable display and/or an electronic device including a rollable display.

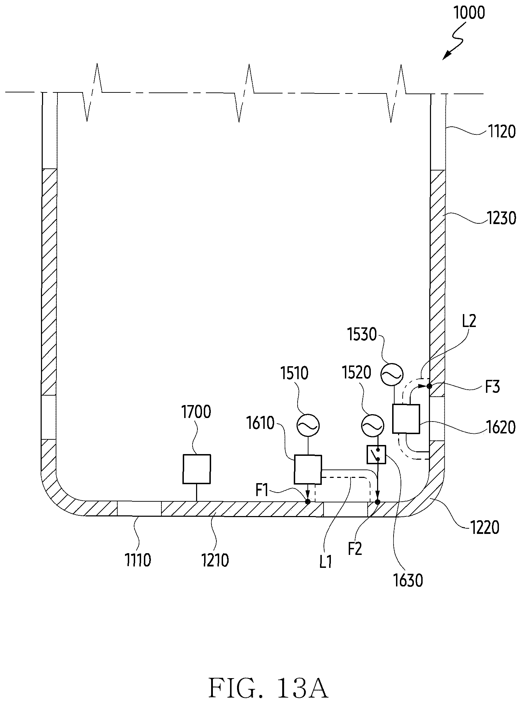

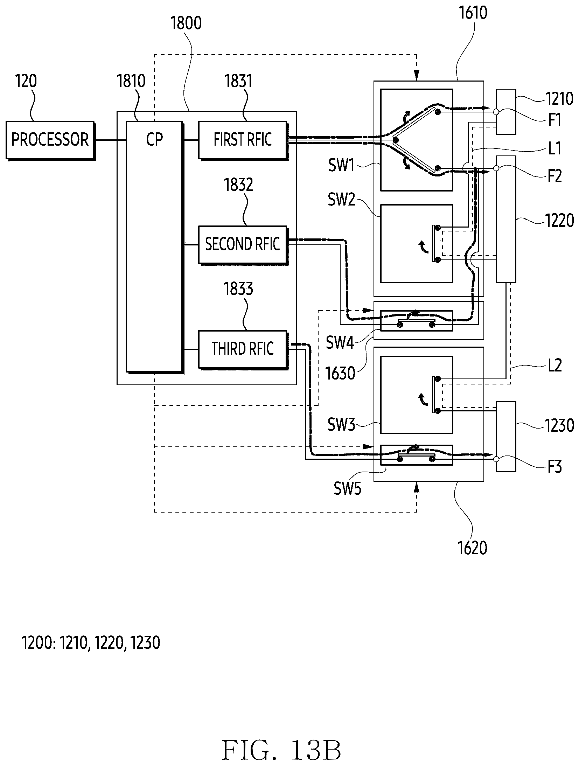

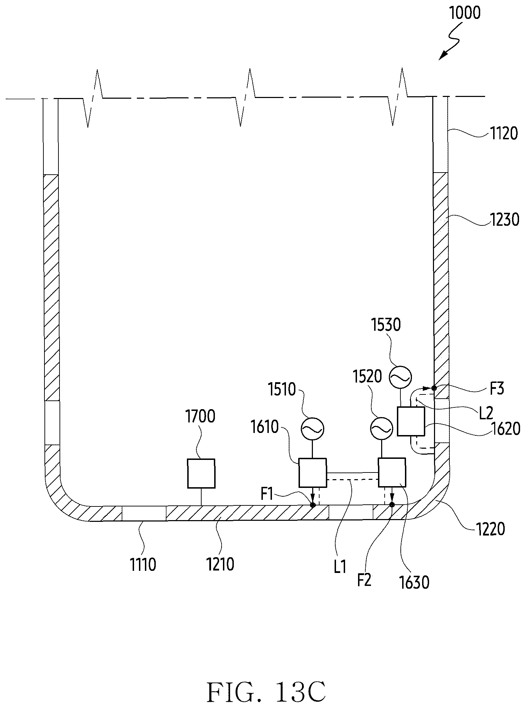

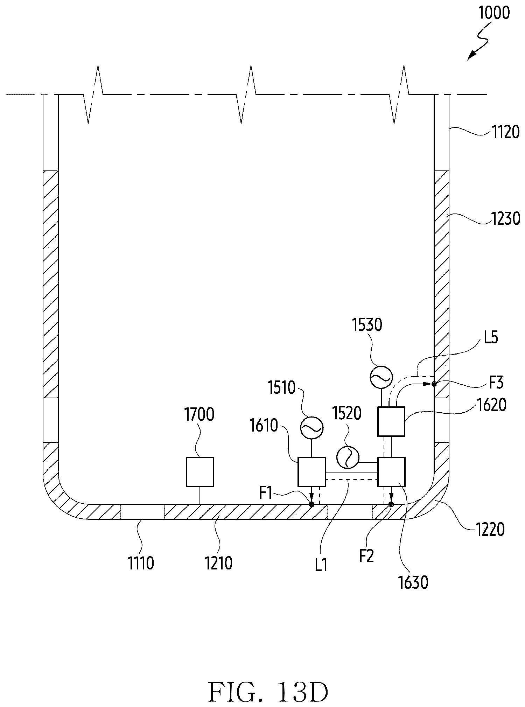

FIG. 13A illustrates an example of a connection relationship between a feeder and conductive portions of an electronic device according to an embodiment. FIG. 13B illustrates an example of a simplified block diagram of a wireless communication module of the electronic device illustrated in FIG. 13A. FIGS. 13C and 13D each illustrates an example of a connection relationship between a feeder and conductive portions of an electronic device according to an embodiment.

Referring to FIGS. 13A, 13C, and 13D, when the electronic device 1000 according to an embodiment supports signals in multiple bands through the first conductive portion 1210, the second conductive portion 1220, and the third conductive portion 1230, the electronic device 1000 may feed power through the three feeders (1510, 1520, 1530). For example, the electronic device 1000 may perform wireless communication in the low band and the middle band by the first feeder 1510, perform wireless communication in the high band by the second feeder 1520, and perform wireless communication in the NR band by the third feeder 1530. Compared to the electronic device 1000 illustrated in FIGS. 12A, 12C, and 12E, the electronic device 1000 illustrated in FIGS. 13A, 13C, and 13D may further include a third feeder 1530 configured to feed power to a third feeding point F3. Compared to the case where power is fed from a single feeder to perform wireless communication in the high band and the NR band, the electronic device 1000 according to an embodiment may reduce the loss that may occur during transmission of signals because the high band and NR band wireless signals may be fed from different feeders (1510, 1520, 1530), respectively, without the need to branch from a single feeder.

According to an embodiment, the electronic device 1000 may include a first matching circuit 1610 for transferring a feeding signal to a first feeding point F1 disposed in the first conductive portion 1210 and/or a second feeding point F2 disposed in the second conductive portion 1220, a first switch circuit 1620 configured to electrically connect the second conductive portion 1220 and the third conductive portion 1230, and a second switch circuit 1630 configured to electrically connect the second feeder 1520 and the second conductive portion 1220.

According to an embodiment, the third feeder 1530 may feed power to the third feeding point F3 disposed in the third conductive portion 1230 through the first switch circuit 1620.

Referring to FIG. 13A, the first feeder 1510 may feed to the first feeding point F1 and/or the second feeding point F2, the second feeder 1520 may feed to the second feeding point F2, and the third feeder 1530 may feed to the third feeding point F3. By electrically connecting the first conductive portion 1210 and the second conductive portion 1220 through the first matching circuit 1610, an electrical connection path L1 may be formed between the first conductive portion 1210 and the second conductive portion 1220. By electrically connecting the second conductive portion 1220 and the third conductive portion 1230 through the first switch circuit 1620, an electrical connection path L2 may be formed between the second conductive portion 1220 and the third conductive portion 1230. In a state of the first conductive portion 1210, the second conductive portion 1220, and the third conductive portion 1230 being electrically connected to each other, power may be fed to the first feeding point F 1 and the third feeding point F3, and thus the first conductive portion 1210, the second conductive portion 1220, and the third conductive portion 1230 electrically connected to each other may operate as antennas.

For a wireless communication module 1800 illustrated in FIG. 13B, the description made reference to FIG. 7 may be applied substantially the same. Referring to FIG. 13B, the electronic device 1000 according to an embodiment may include the wireless communication module 1800 including a communication processor 1810, a first RFIC 1831, a second RFIC 1832, and/or a third RFIC 1833.

According to an embodiment, the communication processor 1810 may establish a communication channel of a specified frequency band through the first RFIC 1831 to support wireless communication. For example, the communication processor 1810 may support wireless communication in a low band and/or a middle band through the first RFIC 1831. The communication processor 1810 may establish a communication channel of a frequency band distinct from the specified frequency through the second RFIC 1832 to support wireless communication. For example, the communication processor 1810 may support wireless communication in a high band through the second RFIC 1832. The communication processor 1810 may establish a communication channel of another frequency band through the third RFIC 1833 to support wireless communication. For example, the communication processor 1810 may support wireless communication in an NR band and any other band through the third RFIC 1833.

According to an embodiment, the first conductive portion 1210 may be fed from the first RFIC 1831 through the first matching circuit 1610, the second conductive portion 1220 may be fed from the second RFIC 1832 through the second switch circuit 1630, and the third conductive portion 1230 may be fed from the third RFIC 1833 through the first switch circuit 1620.

For example, the first switch SW1 of the first matching circuit 1610 may electrically connect the first RFIC 1831 and the first conductive portion 1210 to transmit a feed signal from the first RFIC 1831 to the first feeding point F1. The first switch SW1 of the first matching circuit 1610 may electrically connect the first RFIC 1831 and the second conductive portion 1220 to transmit a feed signal from the first RFIC 1831 to the second feeding point F2. The first conductive portion 1210 and the second conductive portion 1220 may be electrically connected through the second switch SW2, and an electrical connection path L1 between the first conductive portion 1210 and the second conductive portion 1220 may be formed through the second switch SW2. The fourth switch SW4 of the second switch circuit 1630 may electrically connect the second RFIC 1832 and the second conductive portion 1220 to transmit a feeding signal from the second RFIC 1832 to the second feeding point F2. The second conductive portion 1220 and the third conductive portion 1230 may be electrically connected to each other through the third switch SW3 of the first switch circuit 1620. An electrical connection path L2 between the second conductive portion 1220 and the third conductive portion 1230 may be formed through the third switch SW3. The fifth switch SW5 of the first switch circuit 1620 may electrically connect the third RFIC 1833 and the third conductive portion 1230 to transmit a feeding signal from the third RFIC 1833 to the third feeding point F3.

Referring to FIG. 13C, the second switch circuit 1630 may transfer a feed signal from the second feeder 1520 to the second feeding point F2. The second feeder 1520 may feed power to the second feeding point F2 through the second switch circuit 1630. According to an embodiment, the first feeder 1510 may feed to the first feeding point F 1 through the first matching circuit 1610, the second feeder 1520 may feed to the second feeding point F2 through the second switch circuit 1630, and the third feeder 1530 may feed to the third feeding point F3 through the first switch circuit 1620.

According to an embodiment, the first feeder 1510 may feed power to the first feeding point F1 and/or the second feeding point F2. For example, the first feeder 1510 may feed to the first feeding point F1 through the first matching circuit 1610 or may feed to the second feeding point F1 through the first matching circuit 1610 and the second switch circuit 1630. According to an embodiment, the second feeder 1520 may feed power to the first feeding point F1 and/or the second feeding point F2. For example, the second feeder 1520 may feed to the second feeding point F2 through the second switch circuit 1630, or may feed to the first feeding point F1 through the first matching circuit 1610 and the second switch circuit 1630.

Referring to FIG. 13D, the electronic device 1000 according to an embodiment may include a first switch circuit 1620 configured to selectively and electrically connect the second conductive portion 1220 and the third conductive portion 1230. The first switch circuit 1620 may be electrically connected to the second switch circuit 1630 and may be electrically connected to the third conductive portion 1230.

According to an embodiment, the first feeder 1510 may feed power to the first feeding point F1, the second feeding point F2, and/or the third feeding point F3. For example, the first feeder 1510 may feed power to the first feeding point F1 through the first matching circuit 1610. For example, the first feeder 1510 may feed power to the second feeding point F2 through the first matching circuit 1610 and the second switch circuit 1630. For example, the first feeder 1510 may feed power to the third feeding point F3 through the first matching circuit 1610, the second switch circuit 1630, and the first switch circuit 1620.

According to an embodiment, the second feeder 1520 may feed power to the first feeding point F1, the second feeding point F2, and/or the third feeding point F3. For example, the second feeder 1520 may feed power to the first feeding point F1 through the second switch circuit 1630 and the first matching circuit 1610. For example, the second feeder 1520 may feed power to the second feeding point F2 through the second switch circuit 1630. For example, the second feeder 1520 may feed power to the third feeding point F3 through the second switch circuit 1630 and the first switch circuit 1620.

According to an embodiment, the third feeder 1530 may feed power to the first feeding point F1, the second feeding point F2, and/or the third feeding point F3. For example, the third feeder 1530 may feed power to the first feeding point F1 through the first switch circuit 1620, the second switch circuit 1630, and the first matching circuit 1610. For example, the third feeder 1530 may feed power to the second feeding point F2 through the first switch circuit 1620 and the second switch circuit 1630. For example, the third feeder 1530 may feed power to the third feeding point F3 through the first switch circuit 1620.

The above-described electronic device 1000 of FIGS. 13A, 13C, and 13D has been described for a non-deformable electronic device such as e.g., a bar type, but may be also applied to an electronic device including a foldable display and/or an electronic device including a rollable display, without limitation thereto.

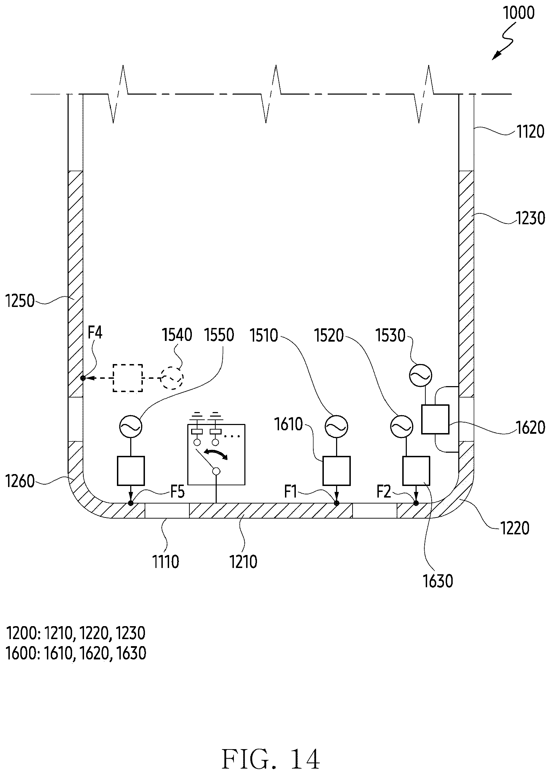

FIG. 14 illustrates a connection relationship between feeders and conductive portions of an electronic device according to an embodiment.

Referring to FIG. 14, the electronic device 1000 according to an embodiment may include a plurality of feeders (1510, 1520, 1530, 1540, 1550) to support signals of multiple bands by distinction. For example, the electronic device 1000 may include the first feeder 1510, the second feeder 1520, the third feeder 1530, a fourth feeder 1540 configured to feed power to a fourth feeding point F4 disposed in a fifth conductive portion 1250, and/or a fifth feeder 1550 configured to feed power to a fifth feeding point F5 disposed in a sixth conductive portion 1260. According to an embodiment, the electronic device 1000 may distinguish and support a plurality of radio signals in the NR band according to classification of a 5G NR frequency band defined in the 3GPP.

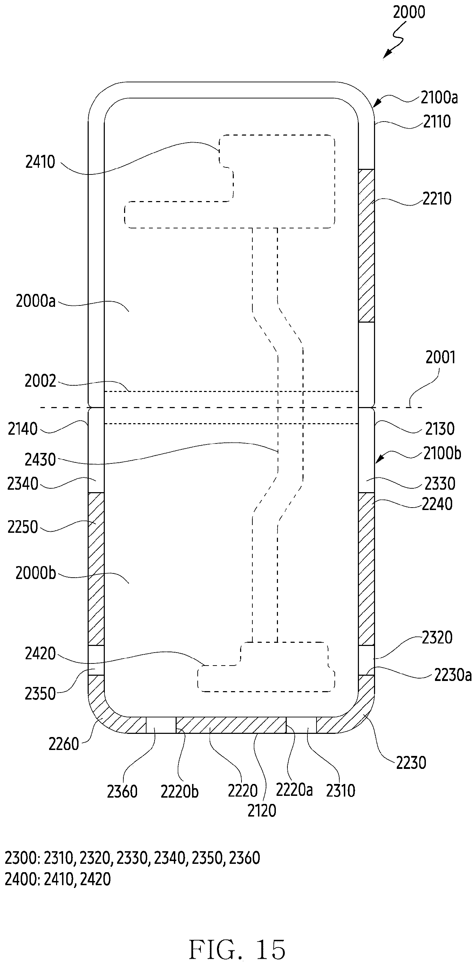

FIG. 15 is a front view of an electronic device according to an embodiment. FIG. 16 illustrates examples of antennas formed by electrical connection of conductive portions of an electronic device according to an embodiment.

Referring to FIGS. 15 and 16, an electronic device 2000 according to an embodiment may include a first housing 2100a, a second housing 2100b, a printed circuit board 2400, and a processor (e.g., the processor 120 of FIG. 1). The first housing 2100a and the second housing 2100b may be coupled to be folded or unfolded with respect to each other.

According to an embodiment, the electronic device 2000 may include a first housing 2100a, a second housing 2100b, and a hinge structure 2002. The first housing 2100a and the second housing 2100b may be disposed to be substantially symmetrical with respect to a folding axis 2001. The electronic device 2000 may further include a display (not shown) disposed on a first surface 2000a of the first housing 2100a, a second surface 2000b of the second housing 2100b, and the hinge structure 2002. The hinge structure 2002 may rotatably connect the first housing 2100a and the second housing 2100b to each other.

For example, the hinge structure 2002 may include a hinge module and hinge plates rotated by the hinge module. The hinge structure 2002 may rotatably connect the first housing 2100a and the second housing 2100b supported by the hinge plates. The electronic device 2000 may be changed, using the hinge structure 2002, to an unfolding state in which the first surface 2000a and the second surface 2000b face the same direction or a folding state in which a direction in which the first surface 2000a faces is different from a direction in which the second surface 2000b faces.

The first housing 2100a may be referred to as an upper housing disposed on an upper portion (+y direction) of the second housing 2100b, and the second housing 2100b may be referred to as a lower housing disposed on a lower portion (-y direction) of the first housing 2100a, but the disclosure is not limited thereto. The electronic device 2000 illustrated in FIG. 15 may be substantially the same as the electronic device (e.g., the electronic device 1000 of FIG. 4) described with reference to FIGS. 4 to 14, except for a structure for unfolding or folding operations of the first housing 2100a and the second housing 2100b, and thus a redundant description thereof will be omitted.

According to an embodiment, the first housing 2100a may include a first conductive portion 2210 disposed on the first side portion 2110. The first conductive portion 2210 may operate as a first antenna (e.g., the first antenna A1 of FIG. 16). The first antenna A1 may be referred to as an upper antenna disposed in +y direction with respect to the folding axis 2001.

According to an embodiment, the second housing 2100b may include a second conductive portion 2220 disposed on a second side portion 2120, a third conductive portion 2230 spaced apart from one end 2220a of the second conductive portion 2220 and disposed on the second side portion 2120 and a third side portion 2130 perpendicular to the second side portion 2120, and a fourth conductive portion 2240 spaced apart from one end 2230a of the third conductive portion 2230 and disposed on the third side portion 2130. According to an embodiment, the second housing 2100b may include a fifth conductive portion 2250 disposed on a fourth side portion 2140 facing the third side portion 2130, and a sixth conductive portion 2260 spaced apart from another end 2220b opposite to one end 2220a of the first conductive portion and disposed on the second side portion 2120 and the fourth side portion 2140.

According to an embodiment, the second housing 2100b may include a plurality of non-conductive portions 2300 disposed between the conductive portions (2220, 2230, 2240, 2250, 2260). The second housing 2100b may have a segmented structure formed of the conductive portions (2220, 2230, 2240, 2250, 2260) and the plurality of non-conductive portions 2300. For example, the plurality of non-conductive portions 2300 may include a first non-conductive portion 2310 disposed between the second conductive portion 2220 and the third conductive portion 2230, a second non-conductive portion 2320 disposed between the third conductive portion 2230 and the fourth conductive portion 2240, a third non-conductive portion 2330 disposed between the fourth conductive portion 2240 and the folding axis 2001, a fourth non-conductive portion 2340 disposed between the fifth conductive portion 2250 and the folding axis 2001, a fifth non-conductive portion 2250 disposed between the fifth conductive portion 2250 and the sixth conductive portion 2260, and a sixth non-conductive portion 2360 disposed between the sixth conductive portion 2260 and the second conductive portion 2220.

The second side portion 2120 may correspond to the first side portion (e.g., the first side portion 1110 of FIG. 4) of FIG. 4. In a state in which the first housing 2100a and the second housing 2100b are unfolded with respect to each other, the first side portion 2110 and the third side portion 2130 may form a substantially straight line.

Although not illustrated in FIG. 15, the electronic device 2000 according to an embodiment may include a circuit configured to selectively and electrically connect the second conductive portion 2220, the third conductive portion 2230, and/or the fourth conductive portion 2240. The second conductive portion 2220, the third conductive portion 2230, and the fourth conductive portion 2240 may be fed from a feeder to operate as at least one second antenna A2. The at least one second antenna A2 may be formed by at least one of the second conductive portion 2220, the third conductive portion 2230, and the fourth conductive portion 2240. The at least one second antenna A2 may be referred to as a lower antenna disposed in the -y direction with respect to a folding axis.

According to an embodiment, the processor may control the circuit to form at least one second antenna A2 by electrical connection of each of the second conductive portion to the fourth conductive portion (2220, 2230, 2240) or at least two of the second conductive portion to the fourth conductive portion (2220, 2230, 2240). Referring to a state 2000a of FIG. 16, the at least one second antenna A2 may be formed by electrically connecting the second conductive portion to the fourth conductive portion (2220, 2230, 2240). Referring to a state 2000b of FIG. 16, the at least one second antenna A2 may be transformed into a third antenna A3 formed by electrically connecting the second conductive portion 2220 and the third conductive portion 2230, and a fourth antenna A4 formed by a fourth conductive portion 2240 electrically disconnected from the second conductive portion 2220 and the third conductive portion 2230. Referring to a state 2000c of FIG. 16, the at least one second antenna A2 may be transformed into a fourth antenna A4 formed by the fourth conductive portion 2240, a fifth antenna A5 formed by the second conductive portion 2220, and a sixth antenna A6 formed by the third conductive portion 2230.

The descriptions of the above-described components made with reference to FIGS. 5, 10A, 10B, 10C, 12A, 12C, 12D, 12E, 13A, 13C, 13D, and 14 may be applied substantially the same to the electronic device 2000 illustrated in FIG. 15. For example, the first conductive portion (e.g., the first conductive portion 1210 of FIG. 10A), the second conductive portion (e.g., the second conductive portion 1220 of FIG. 10A), and the third conductive portion (e.g., the third conductive portion 1230 of FIG. 10A), as illustrated in FIG. 10A, may correspond to the second conductive portion 2210, the third conductive portion 2230, and the fourth conductive portion 2240 of the electronic device 2000 illustrated in FIG. 15, respectively. For example, the electronic device 2000 according to an embodiment may include all the configuration corresponding to the feeder (e.g., the feeder 1500 of FIG. 10A), the circuit (e.g., the first matching circuit 1610, the first switch circuit 1620, the second switch circuit 1630, the third switch circuit 1640 of FIG. 10B), and the second matching circuit (e.g., the second matching circuit 1700 of FIG. 10A), as illustrated in FIG. 10A.

According to an embodiment, the first antenna A1 may be configured to receive a first signal in a downlink frequency range (e.g., 758 MHz to 803 MHz) of a first frequency band (e.g., n28 of the 3GPP standard) and a second signal in a downlink frequency range (e.g., 791 MHz to 821 MHz) of a second frequency band (e.g., B20 of the 3GPP standard) from an external electronic device 2000. The first antenna A1 may function as a reception antenna in a low band.

According to an embodiment, the second antenna A2 may transmit and/or receive signals in multiple bands. The second antenna A2 may be configured to receive the first signal and the second signal from the external electronic device 2000, and may be configured to transmit a third signal in an uplink frequency range (e.g., 703 MHz to 748 MHz) of the first frequency band and a fourth signal in an uplink frequency range (e.g., 832 MHz to 862 MHz) of the second frequency band to the external electronic device 2000. Since the length of the second antenna A2 may be longer than the length of the first antenna A1, a relatively wide range of bandwidth may be secured.

According to an embodiment, the first antenna A1 having a relatively less effective volume of the radiator may support the first signal and the second signal, and the second antenna A2 capable of adjusting an effective volume of the radiator may support the first signal, the second signal, the third signal, and the fourth signal within the uplink frequency range (e.g., 832 MHz to 862 MHz) of the second frequency band. Thus, it is possible to support the first signal, the second signal, the third signal, and the fourth signal, through the second antenna A2 capable of adjusting the effective volume of the radiator by the second conductive portion 2220, the third conductive portion 2230, and the fourth conductive portion 2240, and therefore the performance of transmission and/or reception of signals may be improved.

In use, the electronic device 2000 according to an embodiment may control to use the first antenna A1 positioned close to the user's head as an antenna for receiving a wireless signal, thereby reducing performance degradation due to interaction with the user's body.

According to an embodiment, the printed circuit board 2400 may include a plurality of conductive layers and a plurality of non-conductive layers alternately stacked with the conductive layers. The printed circuit board 2400 may provide an electrical connection between the printed circuit board 2400 and/or various electronic components disposed outside, using wirings and conductive vias formed in the conductive layer. According to an embodiment, the printed circuit board 2400 may include a first printed circuit board 2410 and a second printed circuit board 2420 spaced apart from each other. The first printed circuit board 2410 and the second printed circuit board 2420 may be electrically connected to each other. For example, the housing may include an FRC 2430 for electrically connecting the first printed circuit board 2410 and the second printed circuit board 2420. According to an embodiment, the first printed circuit board 2410 may be disposed in the first housing 2100a, and the second printed circuit board 2420 may be disposed in the second housing 2100b. The first printed circuit board 2410 may be electrically connected to the first antenna A1 adjacent thereto, and the second printed circuit board 2420 may be electrically connected to the second antenna A2 adjacent thereto.

According to an embodiment, the processor may communicate with the external electronic device 2000 through the first antenna A1 and the second antenna A2. The wireless signal received through the first antenna A1 may be transmitted to the first printed circuit board 2410 and then provided to a processor disposed on the first printed circuit board 2410. The wireless signal received through the second antenna A2 may be transferred to the second printed circuit board 2420 and further to the first printed circuit board 2410 through the FRC 2430, thereafter being provided to the processor.

According to an embodiment, an electronic device (e.g., an electronic device 1000 of FIG. 4) comprises a housing (e.g., a housing 1100 of FIG. 4), the housing including a first conductive portion (e.g., a first conductive portion 1210 of FIG. 4) disposed on a first side portion (e.g., a first side portion 1110 of FIG. 4), a second conductive portion (e.g., a second conductive portion 1220 of FIG. 4) spaced apart from one end (e.g., one end 1210a of FIG. 4) of the first conductive portion and disposed in the first side portion and a second side portion (e.g., a second side portion 1120 of FIG. 4) perpendicular to the first side portion, a third conductive portion (e.g., the third conductive portion 1230 of FIG. 4) spaced apart from one end (e.g., one end 1220a) of the second conductive portion and disposed in the second side portion, and a plurality of non-conductive portions (e.g., a plurality of non-conductive portions 1300 of FIG. 4) disposed between the first conductive portion, the second conductive portion, and the third conductive portion; a feeder (e.g., a feeder 1500 of FIG. 5) feeding to a feeding point (e.g., a feeding point F1 or F2 of FIG. 5) disposed adjacent to at least one of the one end of the first conductive portion or another end (e.g., another end 1220b of FIG. 5) of the second conductive portion; first matching circuitry (e.g., a first matching circuit 1610 of FIG. 5) capable of electrically connecting the first conductive portion and the second conductive portion; switch circuitry (e.g., a first switch circuit 1620 and a second switch circuit 1630 of FIG. 5) capable of electrically connecting the second conductive portion and the third conductive portion; and a processor (e.g., a processor 120 of FIG. 7) operatively connected to the feeder, the first matching circuitry, and the switch circuitry, wherein the processor may communicate with an external electronic device through the first conductive portion, the second conductive portion, and the third conductive portion, and wherein a first electrical path (e.g., a first electrical path P1 of FIG. 5) from the feeding point to the other end of the first conductive portion may be different from a second electrical path (e.g., a second electrical path P2 of FIG. 5) from the feeding point to one end far from the second conductive portion of both ends of the third conductive portion.

According to an embodiment, a frequency range of a signal transmitted or received through an area through which the first electrical path passes may partially overlap a frequency range of a signal transmitted or received through an area through which the second electrical path passes.

According to an embodiment, the processor may be configured to receive a first signal in a downlink frequency range of a first frequency band and a second signal in a downlink frequency range of a second frequency band from an external electronic device through the first conductive portion, the second conductive portion, and the third conductive portion, and transmit a third signal in an uplink frequency range of the first frequency band and a fourth signal in an uplink frequency range of the second frequency band to the external electronic device.

According to an embodiment, the second side portion may include a first region (e.g., a first region 1121 of FIG. 4) in which the second conductive portion and the third conductive portion are disposed and a second region (e.g., a second region 1122 of FIG. 4) distinct from the first region, the electronic device may further include a fourth conductive portion (e.g., a fourth conductive portion 1240 of FIG. 4) disposed in the second region, and the processor operatively connected to the fourth conductive portion may be configured to receive the first signal and the second signal from an external electronic device through the fourth conductive portion.

According to an embodiment, the processor may be configured to: electrically connect the first conductive portion and the second conductive portion by controlling the first matching circuitry, electrically disconnect the second conductive portion and the third conductive portion by controlling the switch circuitry, receive a first signal in a downlink frequency range of a first frequency band and a second signal in a downlink frequency range of a second frequency band from an external electronic device through the first conductive portion and the second conductive portion, transmit a third signal in an uplink frequency range of the first frequency band and a fourth signal in an uplink frequency range of the second frequency band to an external electronic device, and to transmit or receive a fifth signal of a third frequency band to/from the external electronic device through the third conductive portion.

According to an embodiment, the processor may be configured to: electrically disconnect the first conductive portion, the second conductive portion, and the third conductive portion from each other, by controlling the first matching circuitry and the switch circuitry, receive a first signal in a downlink frequency range of a first frequency band and a second signal in a downlink frequency range of a second frequency band from an external electronic device through the first conductive portion, transmit a third signal in an uplink frequency range of the first frequency band and a fourth signal in an uplink frequency range of the second frequency band to an electronic device, transmit or receive a fifth signal of a third frequency band to or from an external electronic device through the third conductive portion, and transmit or receive a sixth signal of a fourth frequency band to or from an external electronic device through the second conductive portion.

According to an embodiment, the electronic device may further include a second matching circuitry (e.g., a second matching circuitry 1700 of FIG. 5) electrically connected to the first conductive portion.

According to an embodiment, the feeding point may include a first feeding point (e.g., a first feeding point F1 of FIG. 5) disposed in the first conductive portion and a second feeding point (e.g., a second feeding point F2 of FIG. 5) disposed in the second conductive portion, and the first matching circuitry may electrically connect the first feeding point and the second feeding point to the feeder.

According to an embodiment, the first electrical path (e.g., a first electrical path P1 of FIG. 5) may be formed from the first feeding point to another end of the first conductive portion, and the second electrical path (e.g., a fourth electrical path P4 of FIG. 5) may be formed from the second feeding point to one end (e.g., the one end 1230a) of the third conductive portion.

According to an embodiment, the housing may include a third side portion (e.g., a third side portion 1130 of FIG. 4) facing the second side portion, a fifth conductive portion (e.g., a fifth conductive portion 1250 of FIG. 4) disposed on the third side portion, and a sixth conductive portion (e.g., a sixth conductive portion 1260 of FIG. 4) spaced apart from another end opposite to the one end of the first conductive portion and disposed on the first side portion and the third side portion, wherein the feeding point may include a third feeding point (e.g., a fourth feeding point F4 of FIG. 14) disposed on the fifth conductive portion and a fourth feeding point (e.g., a fifth feeding point F5 of FIG. 14) disposed in the sixth conductive portion.

According to an embodiment, an electronic device may comprise: a first housing (e.g., a first housing 2100a of FIG. 15) including a first conductive portion (e.g., a first conductive portion 2210 of FIG. 15) disposed on a first side portion (e.g., a first side portion 2110 of FIG. 15); a second housing (e.g., a second housing 2100b of FIG. 15) including a second conductive portion (e.g., a second conductive portion 2220 of FIG. 15) disposed on a second side portion (e.g., a second side portion 2120 of FIG. 15), a third conductive portion (e.g., a third conductive portion 2230 of FIG. 15) spaced apart from one end (e.g., one end 2220a of FIG. 15) of the second conductive portion and disposed on the second side portion and a third side portion (e.g., a third side portion 2130 of FIG. 15) perpendicular to the second side portion, a fourth conductive portion (e.g., a fourth conductive portion 2240 of FIG. 15) spaced apart from one end (e.g., one end 2230a of FIG. 15) of the third conductive portion and disposed on the third side portion, and a plurality of non-conductive portions (e.g., a plurality of non-conductive portions 2300 of FIG. 15) disposed between the second conductive portion, the third conductive portion, and the fourth conductive portion, the second housing being coupled to the first housing to be folded or unfolded with each other; a first antenna (e.g., a first antenna A1 of FIG. 16) formed by the first conductive portion; at least one second antenna (e.g., at least one second antenna A2 of FIG. 16) formed by at least one of the second conductive portion, the third conductive portion, and the fourth conductive portion; first matching circuitry (e.g., first matching circuitry 1610 of FIG. 5) capable of electrically connecting the second conductive portion and the third conductive portion, switch circuitry (e.g., first switch circuit 1620 or the second switch circuit 1630 of FIG. 5) capable of electrically connecting the third conductive portion and the fourth conductive portion, and a processor (e.g., a processor 120 of FIG. 7) operatively coupled to the first matching circuitry and the switch circuitry, wherein the processor may be configured to control the first matching circuitry and the switch circuitry to form the at least one second antenna by electrical connection of each of the second conductive portion to the fourth conductive portion or at least two of the second conductive portion to the fourth conductive portion, wherein the first antenna may be configured to receive a first signal in a downlink frequency range of a first frequency band and a second signal in a downlink frequency range of a second frequency band from an external electronic device, and wherein the at least one second antenna may be configured to receive the first signal and the second signal from the external electronic device and transmit a third signal in an uplink frequency range of the first frequency band and a fourth signal in an uplink frequency range of the second frequency band to the external electronic device.

According to an embodiment, the processor may be configured to: control the first matching circuitry to electrically connect the second conductive portion and the third conductive portion; when the third conductive portion and the fourth conductive portion form the at least one second antenna electrically disconnected, control the switch circuitry to, through the second conductive portion and the third conductive portion, receive the first signal and the second signal from an external electronic device and transmit the third signal and the fourth signal to the external electronic device; and transmit or receive a fifth signal of a third frequency band to or from an external electronic device.

According to an embodiment, the processor may be configured to, by controlling the first matching circuit and the switch circuit to form the at least one second antenna, in which the second conductive portion, the third conductive portion, and the fourth conductive portion are electrically disconnected from each other, receive the first signal and the second signal from an external electronic device, through the second conductive portion, transmit the third signal and the fourth signal to the external electronic device, transmit or receive a fifth signal of a third frequency band to or from the external electronic device through the fourth conductive portion, and transmit or receive a sixth signal of a fourth frequency band to or from the external electronic device through the third conductive portion.

According to an embodiment, the electronic device may further include a feeder (e.g., a feeder 1500 of FIG. 5) configured to feed a feeding point disposed at at least one of the second conductive portion or the third conductive portion, wherein a first electrical path (e.g., a first electrical path P1 of FIG. 5) from the feeding point to another end of the second conductive portion may be different from a second electrical path (e.g., a second electrical path P2 of FIG. 5) from the feeding point to one end far from the third conductive portion among both ends of the fourth conductive portion.

According to an embodiment, the feeding point may include,
a first feeding point (e.g., a first feeding point F 1 of FIG. 5) disposed in the second conductive portion and a second feeding point (e.g., a second feeding point F2 of FIG. 5) disposed in the third conductive portion), wherein the first matching circuitry may include a tuner (e.g., a first matching circuit 1610 of FIG. 5) configured to electrically connect the feeder to at least one of the first feeding point and the second feeding point.

According to an embodiment, the first electrical path (e.g., the first electrical path P1 of FIG. 5) may be formed from the first feeding point to another end of the second conductive portion, and the second electrical path (e.g., the fourth electrical path P4 of FIG. 5) may be formed from the second feeding point to one end of the third conductive portion.

According to an embodiment, the second housing may include a fourth side portion (e.g., a fourth side portion 2140 of FIG. 15) facing the third side portion, a fifth conductive portion (e.g., a fifth conductive portion 2250 of FIG. 15) disposed on the fourth side portion, and a sixth conductive portion (e.g., a sixth conductive portion 2260 of FIG. 15) spaced apart from another end opposite to the one end of the first conductive portion and disposed on the second side portion and the fourth side portion, wherein the feeding point may include a third feeding point (e.g., a fourth feeding point F4 of FIG. 14) disposed on the fifth conductive portion, and a fourth feeding point (e.g., a fifth feeding point F5 of FIG. 14) disposed in the sixth conductive portion.

According to an embodiment, a frequency of a signal transmitted or received through an area through which the first electrical path passes may partially overlap a frequency of a signal transmitted or received through an area through which the second electrical path passes.

According to an embodiment, the downlink frequency range of the first frequency band may partially overlap the downlink frequency range of the second frequency band.

According to an embodiment, the electronic device may further include second matching circuitry (e.g., second matching circuitry 1700 of FIG. 5) electrically connected to the second conductive portion.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic," "logic block,", "unit", "part,", "portion" or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a housing comprising:
a first conductive portion disposed on a first side portion,
a second conductive portion spaced apart from one end portion of the first conductive portion and disposed in the first side portion and a second side portion perpendicular to the first side portion,
a third conductive portion spaced apart from one end portion of the second conductive portion and disposed in the second side portion, and
a plurality of non-conductive portions disposed between the first conductive portion, the second conductive portion, and the third conductive portion;
a feeder that feeds power to a feeding point disposed adjacent to at least one of the one end portion of the first conductive portion or another end portion of the second conductive portion;
first matching circuitry capable of electrically connecting the first conductive portion and the second conductive portion;
switch circuitry capable of electrically connecting the second conductive portion and the third conductive portion;
a processor operatively connected to the feeder, the first matching circuitry, and the switch circuitry,
wherein the processor is configured to communicate with an external electronic device through the first conductive portion, the second conductive portion, and the third conductive portion, and
wherein a first electrical path from the feeding point to the other end portion of the first conductive portion is different from a second electrical path from the feeding point to one end portion far from the second conductive portion of both ends of the third conductive portion.

2. The electronic device of claim 1,
wherein a frequency range of a signal transmitted or received through an area through which the first electrical path passes and a frequency range of a signal transmitted or received through an area through which the second electrical path passes partially overlap each other.

3. The electronic device of claim 1,
wherein the processor is configured to receive a first signal in a downlink frequency range of a first frequency band and a second signal in a downlink frequency range of a second frequency band from the external electronic device, through the first conductive portion, the second conductive portion, and the third conductive portion.

4. The electronic device of claim 3,
wherein the processor is configured to transmit a third signal in an uplink frequency range of the first frequency band and a fourth signal in an uplink frequency range of the second frequency band to the external electronic device, through the first conductive portion, the second conductive portion, and the third conductive portion.

5. The electronic device of claim 3,
wherein the second side portion includes:
a first region where the second conductive portion and the third conductive portion are disposed, and
a second region different from the first region,
wherein the electronic device further comprises a fourth conductive portion disposed in the second region, and
wherein the processor operatively connected to the fourth conductive portion is configured to receive the first signal and the second signal from the external electronic device through the fourth conductive portion.

6. The electronic device of claim 1,
wherein the processor is configured to:
electrically connect the first conductive portion and the second conductive portion by controlling the first matching circuitry,
electrically disconnect the second conductive portion and the third conductive portions by controlling the switch circuitry,
receive a first signal in a downlink frequency range of a first frequency band and a second signal in a downlink frequency range of a second frequency band from the external electronic device, through the first conductive portion and the second conductive portion, and
transmit a third signal in an uplink frequency range of the first frequency band and a fourth signal in an uplink frequency range of the second frequency band to the external electronic device, through the first conductive portion, the second conductive portion, and the third conductive portion.

7. The electronic device of claim 6,
wherein the processor is configured to transmit or receive a fifth signal of a third frequency band to the external electronic device, through the third conductive portion.

8. The electronic device of claim 1,
wherein the processor is configured to:
electrically disconnect the first conductive portion, the second conductive portion, and the third conductive portion from each other by controlling the first matching circuitry,
receive a first signal in a downlink frequency range of a first frequency band and a second signal in a downlink frequency range of a second frequency band from the external electronic device, through the first conductive portion, and
transmit a third signal in an uplink frequency range of the first frequency band and a fourth signal in an uplink frequency range of the second frequency band to the external electronic device, through the first conductive portion.

9. The electronic device of claim 8,
wherein the processor is configured to:
transmit or receive a fifth signal of a third frequency band, through the third conductive portion, and
transmit or receive a sixth signal of a fourth frequency band to/from the external electronic device, through the second conductive portion.

10. The electronic device of claim 1, further comprising second matching circuitry electrically connected to the first conductive portion.

11. The electronic device of claim 1,
wherein the feeding point includes:
a first feeding point disposed in the first conductive portion, and
a second feeding point disposed in the second conductive portion, and
wherein the first matching circuitry electrically connects the first feeding point and the second feeding point to the feeder.

12. The electronic device of claim 11,
wherein the first electrical path is formed from the first feeding point to the other end portion of the first conductive portion, and
wherein the second electrical path is formed from the second feeding point the one end portion of the third conductive portion.

13. The electronic device of claim 1,
wherein the housing includes:
a third side portion opposite to the second side portion,
a fifth conductive portion disposed in the third side portion, and
a sixth conductive portion spaced apart from another end portion opposite to the one end portion of the first conductive portion, and disposed in the first side portion and the third side portion, and
wherein the feeding point includes:
a third feeding point disposed in the fifth conductive portion, and
a fourth feeding point disposed in the sixth conductive portion.

14. A method of an electronic device, comprising operations executed by a processor of the electronic device according to any one of claims 1 to 13.

15. A computer readable storage medium storing at least one programs including instructions for executing operations executed by a processor of an electronic device according to any one of claims 1 to 13.
